(19) Europäisches Patentamt / European Patent Office / Office européen des brevets

(11) **EP 3 519 899 B1**

(12) **FASCICULE DE BREVET EUROPEEN**

(45) Date de publication et mention de la délivrance du brevet:
**22.07.2020 Bulletin 2020/30**

(51) Int Cl.:
***G03H 1/08*** *(2006.01)*      ***G01N 15/14*** *(2006.01)*
***G03H 1/04*** *(2006.01)*

(21) Numéro de dépôt: **17786960.9**

(22) Date de dépôt: **27.09.2017**

(86) Numéro de dépôt international:
**PCT/FR2017/052625**

(87) Numéro de publication internationale:
**WO 2018/060619 (05.04.2018 Gazette 2018/14)**

(54) **DISPOSITIF D'OBSERVATION D'UN ÉCHANTILLON ET PROCÉDÉ D'OBSERVATION D'UN ÉCHANTILLON**

VORRICHTUNG ZUR BEOBACHTUNG EINER PROBE UND VERFAHREN ZUR BEOBACHTUNG EINER PROBE

DEVICE FOR OBSERVING A SAMPLE AND METHOD FOR OBSERVING A SAMPLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2016 FR 1659432**

(43) Date de publication de la demande:
**07.08.2019 Bulletin 2019/32**

(73) Titulaire: **Commissariat à l'énergie atomique et aux énergies alternatives 75015 Paris (FR)**

(72) Inventeurs:
• **ALLIER, Cédric**
  **38000 Grenoble (FR)**
• **BORDY, Thomas**
  **38000 Grenoble (FR)**
• **CIONI, Olivier**
  **38100 Grenoble (FR)**
• **HERVE, Lionel**
  **38700 Corenc (FR)**
• **MOREL, Sophie**
  **59500 Douai (FR)**

(74) Mandataire: **GIE Innovation Competence Group 310, avenue Berthelot 69372 Lyon Cedex 08 (FR)**

(56) Documents cités:
**WO-A1-2014/118263    WO-A1-2016/107995 FR-A1- 3 030 748**

## Description

## DOMAINE TECHNIQUE

Le domaine technique de l'invention est la microscopie, combinant une modalité classique avec objectif optique de grandissement et une modalité d'imagerie sans lentille.

## ART ANTERIEUR

L'observation d'échantillons, et en particulier des échantillons biologiques, par imagerie sans lentille, a connu un développement important depuis ces dix dernières années. Cette technique permet d'observer un échantillon en le disposant entre une source de lumière et un capteur d'image, sans disposer de lentille de grossissement optique entre l'échantillon et le capteur d'image. Ainsi, le capteur d'image collecte une image de l'onde lumineuse transmise par l'échantillon. Cette image, également appelée hologramme, est formée de figures d'interférence entre l'onde lumineuse émise par la source de lumière et transmise par l'échantillon, et des ondes de diffraction, résultant de la diffraction par l'échantillon de l'onde lumineuse émise par la source de lumière. Ces figures d'interférences sont parfois dénommées figures de diffraction, ou désignées par le terme anglais « diffraction pattern ».

Le document WO2008090330 décrit un dispositif permettant l'observation d'échantillons comportant des cellules par imagerie sans lentille. Ce document montre que l'imagerie sans lentille peut être utilisée à des fins de microscopie, pour compter des cellules. Ce document montre également qu'en se basant sur une analyse morphologique de figures de diffraction, certaines cellules peuvent être identifiées.

Le document WO2014118263 décrit un dispositif combinant une modalité d'imagerie sans lentille et une modalité d'imagerie classique, mettant en œuvre une optique de grossissement. Le document WO2016/107995 décrit un procédé de localisation d'une particule transparente ou translucide. Le procédé est basé sur l'acquisition d'une image défocalisée de la particule, et sur le recours à une reconstruction holographique pour obtenir une position précise de la particule dans l'échantillon. On déplace ensuite un système optique, couplé à une source laser, de façon que la particule soit disposée dans le plan focal du système optique, de façon à optimiser la focalisation du faisceau laser, produit par la source laser, sur la particule.

Un des avantages de l'imagerie sans lentille est l'obtention d'images de qualité tout en disposant d'un champ d'observation nettement plus important que celui d'un microscope. Mais l'hologramme ne permet pas une observation fiable des cellules, ou autres éléments diffusants d'un échantillon, lorsque leur concentration augmente. L'hologramme peut alors être traité par un algorithme de reconstruction holographique, de manière à obtenir une image reconstruite représentant une caractéristique, par exemple le module ou la phase, de l'onde lumineuse traversant l'échantillon et se propageant vers le capteur d'image. Ce type d'algorithme est bien connu dans le domaine de la reconstruction holographique. Un exemple d'algorithme de reconstruction holographique est décrit dans la publication Ryle et al, « Digital in-line holography of biological specimens », Proc. Of SPIE Vol.6311 (2006). Cependant, un tel algorithme peut donner lieu à l'apparition d'un bruit de reconstruction, désigné par le terme "twin image", sur l'image reconstruite.

La demande US2012/0218379 décrit un procédé permettant de reconstruire une image complexe d'un échantillon, cette dernière comportant des informations d'amplitude et de phase, en limitant le twin image. La demande US2012/0148141 applique le procédé décrit dans la demande US2012/0218379 pour reconstruire une image complexe de spermatozoïdes et de caractériser leur mobilité. Cette dernière demande décrit un algorithme dit de tracking, permettant de suivre la trajectoire des spermatozoïdes.

Les inventeurs proposent un dispositif ainsi qu'un procédé d'observation, permettant de combiner le grand champ d'observation conféré par l'imagerie sans lentille, et une analyse plus fine par une modalité d'observation plus précise.

## EXPOSE DE L'INVENTION

Un premier objet de l'invention est un dispositif pour l'observation d'un échantillon tel que défini dans la première revendication.

Le système optique peut notamment être un objectif, par exemple un objectif de microscope, de grandissement supérieur à 5, voire supérieur à 10.

Le dispositif peut comporter une deuxième source de lumière, apte à illuminer l'échantillon lors de l'acquisition de la deuxième image de l'échantillon. La deuxième source de lumière peut être confondue avec la première source de lumière.

Le mécanisme de déplacement peut être une platine apte à se translater ou à effectuer une rotation.

Le dispositif peut comporter :

- un sélecteur, apte à permettre la sélection d'une région d'intérêt dans la première image, ou à partir de la première image. Le sélecteur peut être actionnable manuellement. Il peut notamment s'agir d'un périphérique d'ordinateur de type souris ou clavier.

- un processeur, configuré pour déterminer une position relative de l'échantillon par rapport au système optique selon laquelle la zone d'intérêt sélectionnée s'étend dans le deuxième champ d'observation ;

de telle sorte que le mécanisme de déplacement est configuré pour positionner automatiquement l'échantillon relativement au système optique selon ladite position relative déterminée par le processeur. Ainsi, la zone d'intérêt de l'échantillon peut être observée par le deuxième capteur d'image, à travers le système optique.

Le dispositif peut comporter un processeur configuré pour appliquer un opérateur de propagation numérique à partir de la première image, de façon à :

- calculer une expression complexe de l'onde lumineuse d'exposition selon une surface de reconstruction, et notamment un plan de reconstruction, s'étendant face au premier capteur d'image, définissant une image complexe ;
- former une image, dite reconstruite, à partir du module et/ou de la phase de ladite expression complexe, de telle sorte que dans la deuxième modalité,

de telle sorte que la position de l'échantillon par rapport au système optique est définie en fonction d'une zone d'intérêt sélectionnée à partir de l'image reconstruite.

Par image reconstruite, on entend une image représentant le module de l'onde lumineuse d'exposition, ou la phase de l'onde lumineuse d'exposition, ou leur combinaison, l'image reconstruite étant formée à partir de l'image complexe obtenue par l'application de l'opérateur de propagation numérique sur la première image.

Selon un mode de réalisation, le premier capteur d'image s'étend selon un plan de détection et le dispositif comporte un processeur configuré pour appliquer une focalisation numérique (ou autofocus numérique) à partir de la première image, de façon à estimer une distance entre l'échantillon et le plan de détection, au niveau de la région d'intérêt, de telle sorte que la position relative de l'échantillon par rapport au système optique est déterminée en fonction de la distance ainsi estimée.

Selon un mode de réalisation, le premier capteur d'image et le deuxième capteur d'image sont fixes, et le mécanisme de déplacement est apte à déplacer l'échantillon :

- face au premier capteur d'image dans la première modalité ;
- et/ou face au système optique dans la deuxième modalité.

Selon un mode de réalisation, l'échantillon est fixe ; le mécanisme de déplacement est apte à :

- déplacer le premier capteur d'image pour l'amener face à l'échantillon, dans la première modalité ;
- et/ou déplacer le système optique, et éventuellement le deuxième capteur d'image, pour l'amener face à l'échantillon, dans la deuxième modalité.

Un autre objet de l'invention est un procédé d'observation d'un échantillon tel que défini par la revendication 8.

La deuxième source de lumière peut être confondue avec la première source de lumière. Le premier capteur d'image peut s'étendre selon un plan de détection. Le déplacement relatif de l'échantillon peut notamment permettre de passer automatiquement entre :

- une première modalité, selon laquelle l'échantillon est disposé dans un champ d'observation du premier capteur d'image, dit premier champ d'observation, de façon à acquérir la première image;
- une deuxième modalité, selon laquelle l'échantillon est disposé dans le champ d'observation du deuxième capteur d'image, de façon à acquérir la deuxième image.

Selon un mode de réalisation, lors de l'étape c), la région d'intérêt est sélectionnée sur la première image, à l'aide d'un sélecteur manuel, par exemple une souris d'ordinateur ou un clavier, ou par une analyse effectuée à partir de la première image, l'analyse étant basée sur un critère de sélection préalablement défini, et mise en œuvre par un processeur.

Selon un mode de réalisation, l'étape c) comporte les sous étapes suivantes:

ci) application d'un opérateur de propagation à partir de la première image, de façon à calculer une expression complexe de l'onde lumineuse d'exposition selon une surface de reconstruction, s'étendant face au plan de détection, définissant une image complexe ;

cii) à partir de l'image complexe calculée, formation d'une image, dite image reconstruite, en fonction du module et/ou de la phase de l'expression complexe ;

ciii) sélection de la zone d'intérêt à partir de l'image reconstruite.

Par "à partir de la première image" on entend à partir de la première image, ou par une image obtenue à partir de la première image, par exemple après une troncature ou une normalisation ou l'application d'un filtre.

Lors de la sous-étape ciii), la région d'intérêt peut être déterminée sur l'image reconstruite, à l'aide d'un sélecteur manuel ou par une analyse de l'image reconstruite, l'analyse étant basée sur un critère de sélection préalablement défini, et mise en œuvre par un processeur.

Lors de la sous-étape ci), la surface de reconstruction peut être un plan ; il peut en particulier s'agir d'un plan de l'échantillon, selon lequel s'étend l'échantillon.

Selon un mode de réalisation, lors de l'étape ci), l'opérateur de propagation est appliqué à une image dite intermédiaire, obtenue en appliquant un opérateur à la première image de façon à couvrir un champ d'observation similaire à la première image, et à comporter un nombre de pixels inférieur au nombre de pixels de la première image. Le procédé peut alors comporter les étapes suivantes :

civ) application d'un opérateur de propagation à partir de la première image, dans la région d'intérêt sélectionnée dans la sous-étape ciii), de façon à calculer une expression complexe de l'onde lumineuse d'exposition selon une surface de reconstruction, s'étendant face au plan de détection, et notamment selon le plan de l'échantillon, définissant une image complexe d'intérêt ;

cv) à partir de l'image complexe d'intérêt calculée, formation d'une image, dite image reconstruite d'intérêt, en fonction du module et/ou de la phase de l'expression complexe ;

cvi) affichage de l'image reconstruite d'intérêt.

Le nombre de pixels de l'image intermédiaire peut être au moins 2 fois, voire au moins 10 fois inférieur au nombre de pixels de la première image.

Selon un mode de réalisation, le procédé comporte, préalablement à l'étape c), une étape de calibration d'une position de l'échantillon par rapport au plan de détection, l'étape de calibration comprenant les sous-étapes suivantes :

i) sélection d'une pluralité de points de calibration sur la première image acquise;

ii) détermination d'une zone élémentaire de calibration autour de chaque point de calibration sélectionné ;

iii) mise en œuvre, par un processeur, d'un algorithme de focalisation numérique, de façon à estimer une distance, dite distance de calibration, entre l'échantillon et le plan de détection, au niveau de chaque zone élémentaire de calibration;

iv) partition de la première image acquise en différentes images élémentaires, et association, à chaque image élémentaire, d'une distance entre l'échantillon et le plan de détection, en fonction de la distance de calibration déterminée pour chaque zone élémentaire de calibration,

de telle sorte que

- la sous-étape ci) comporte une application d'un opérateur de propagation à chaque image élémentaire, selon la distance associée à ladite image élémentaire, de façon à calculer, pour chaque image élémentaire, une expression complexe de l'onde lumineuse d'exposition selon un plan de reconstruction élémentaire ;

- l'étape cii) comporte la formation d'une image reconstruite élémentaire à partir du module ou de la phase de l'expression complexe calculée lors de la sous-étape ci), selon chaque plan de reconstruction élémentaire, l'image reconstruite étant obtenue par concaténation de chaque image reconstruite élémentaire.

L'image reconstruite peut être utilisée pour sélectionner une région d'intérêt de l'échantillon. Selon ce mode de réalisation, l'algorithme de focalisation numérique peut comporter les étapes suivantes :

- une application d'un opérateur de propagation numérique à chaque zone élémentaire de calibration afin d'obtenir, pour chacune d'entre elles, une image complexe, dite de calibration, de l'onde lumineuse d'exposition selon différents plans de reconstruction respectivement espacés de différentes distances, du plan de détection;

- pour chaque zone élémentaire de calibration, une détermination, pour chaque plan de reconstruction, d'un indicateur de netteté d'une image de reconstruction obtenue en fonction de la phase ou du module de l'expression complexe de calibration calculée dans ledit plan de reconstruction;

- une détermination d'une distance de calibration entre l'échantillon et le plan de détection au niveau de chaque zone élémentaire de calibration, en fonction des indicateurs de netteté calculés.

Selon un mode de réalisation, le procédé peut comporter, suite à l'étape c), ou au cours de l'étape d), les sous-étapes suivantes :

di) mise en œuvre, par un processeur, d'un algorithme de focalisation numérique, de façon à estimer une distance entre l'échantillon et un plan de détection selon lequel s'étend le capteur d'image, au niveau de la région d'intérêt sélectionnée lors de l'étape c) ;

dii) déplacement relatif de l'échantillon par rapport au système optique, en prenant en compte la distance ainsi estimée, de telle sorte que l'échantillon soit disposé dans un plan focal du système optique.

L'algorithme de focalisation numérique peut comporter :

- l'application d'un opérateur de propagation numérique à partir de la première image, de façon à calculer une expression complexe de l'onde lumineuse d'exposition selon une pluralité de plans de reconstruction respectivement situés à différentes distances de reconstruction du plan de détection;

- l'obtention d'une image de reconstruction à chaque distance de reconstruction, à partir de la phase ou de l'amplitude de l'expression complexe déterminée selon chaque plan de reconstruction;

- la détermination d'un indicateur de netteté à chaque image de reconstruction ;

- la détermination de la distance entre l'échantillon et le plan de détection, au niveau de la région d'intérêt, en fonction de l'indicateur de netteté déterminé sur chaque image de reconstruction.

Le procédé peut être mis en œuvre avec un dispositif tel que décrit dans cette description.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

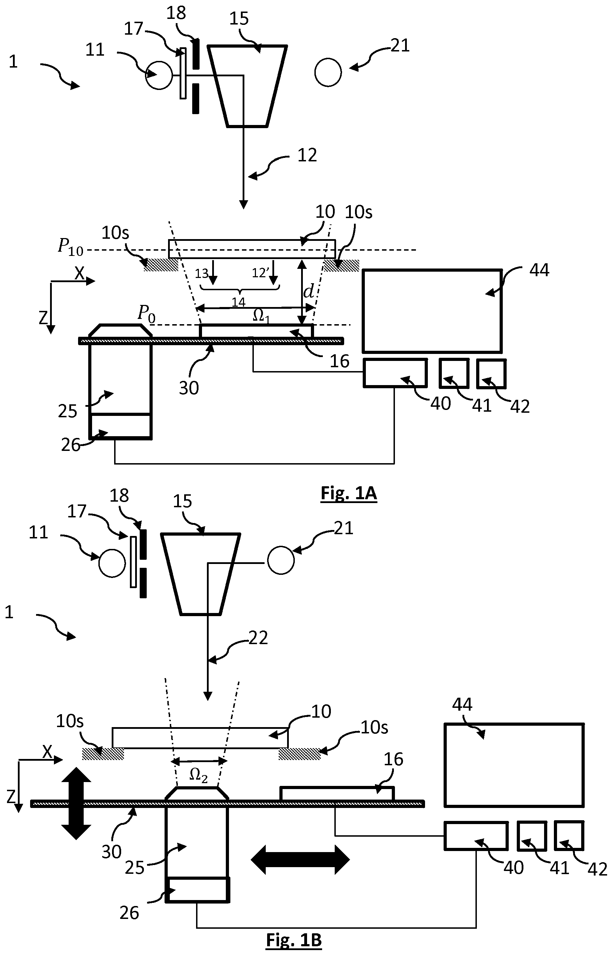

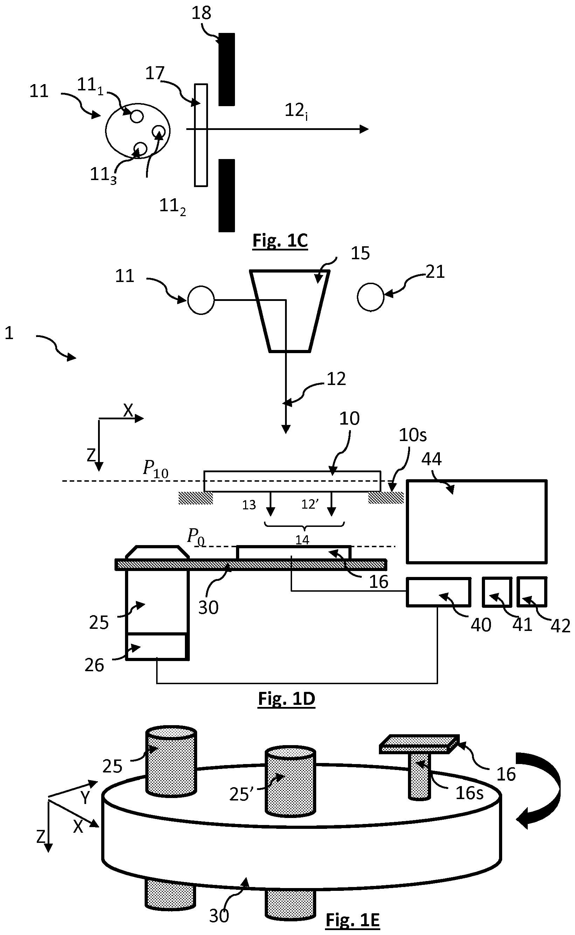

La figure 1A représente un mode de réalisation d'un dispositif selon l'invention, configuré selon une première modalité d'observation d'un échantillon. La figure 1B représente le dispositif de la figure 1A configuré selon une deuxième modalité d'observation de l'échantillon. La figure 1C montre un exemple d'une première source de lumière, apte à équiper un dispositif selon l'invention. La figure 1D montre un autre mode de réalisation d'un dispositif selon l'invention. La figure 1E montre une platine mobile en rotation d'un dispositif selon l'invention.

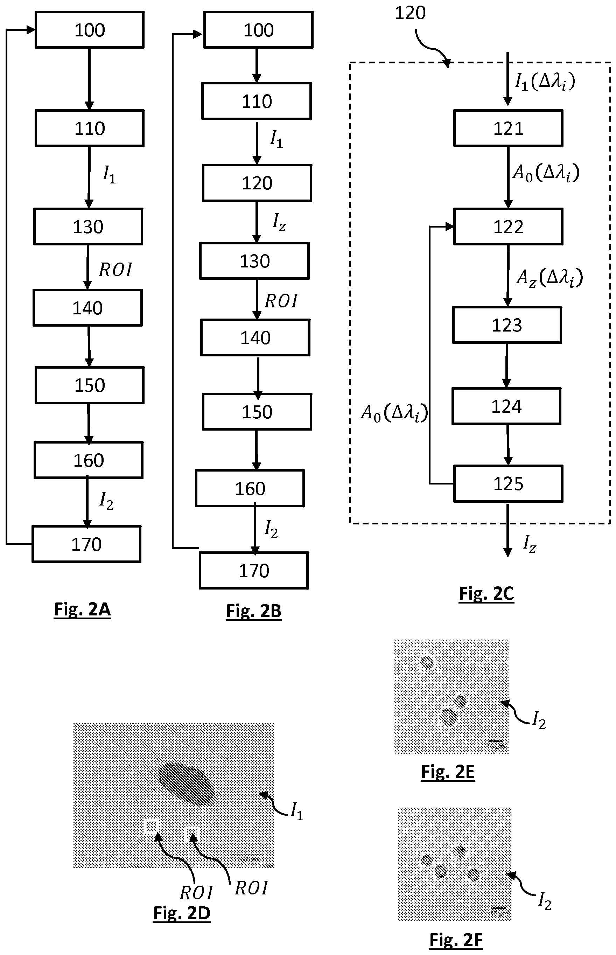

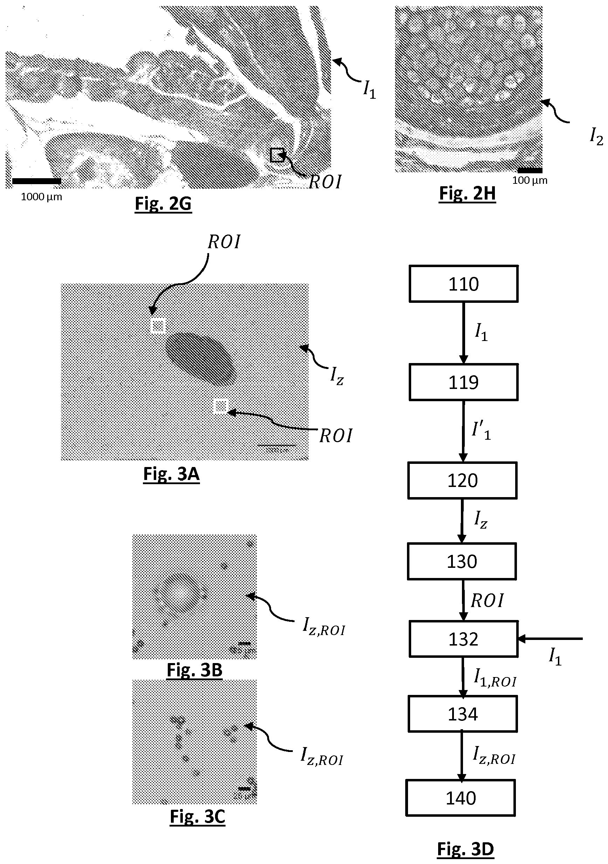

La figure 2A représente les principales étapes d'un procédé d'observation d'un échantillon selon un premier mode de réalisation. La figure 2B représente les principales étapes d'un procédé d'observation d'un échantillon selon un deuxième mode de réalisation. La figure 2C montre les principales étapes composant l'étape 120 décrite en lien avec la figure 2B. La figure 2D est une image d'un échantillon, comportant des cellules, obtenue selon la première modalité d'observation. Les figures 2E et 2F sont des images, obtenues selon la deuxième modalité d'observation, de régions d'intérêt sélectionnées dans l'image de la figure 2D. La figure 2G est une image d'un échantillon, comportant une lame de tissu, obtenue selon la première modalité d'observation. La figure 2H est une image obtenue selon la deuxième modalité d'observation, d'une région d'intérêt sélectionnée dans l'image de la figure 2G.

La figure 3A est une image d'un échantillon, dite image de reconstruction, obtenue selon une variante de la première modalité d'observation. Les figures 3B et 3C sont des images, obtenues selon la variante de la première modalité d'observation, de régions d'intérêt sélectionnées dans l'image de la figure 3A. La figure 3D schématise les principales étapes de la variante mise en œuvre pour obtenir les images 3A à 3C.

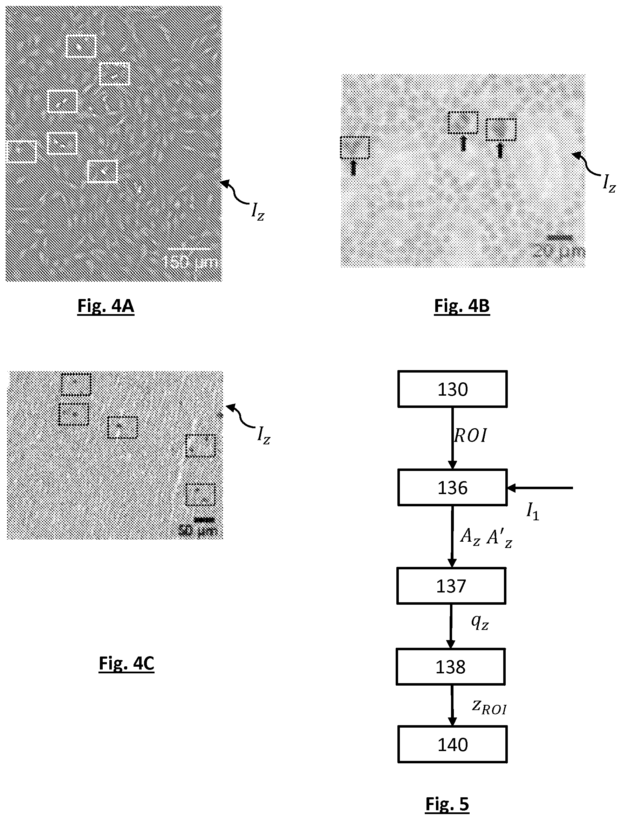

La figure 4A est une image, dite image reconstruite, d'un échantillon comportant des cellules se divisant, ces dernières faisant l'objet d'une région d'intérêt, matérialisée par un cadre clair. La figure 4B est une image, dite image reconstruite, d'un échantillon comportant des globules blancs, ces derniers faisant l'objet d'une région d'intérêt, matérialisée par un cadre sombre. La figure 4C est une image, dite image reconstruite, d'un échantillon comportant des cellules infectées ces dernières faisant l'objet d'une région d'intérêt, matérialisée par un cadre sombre.

La figure 5 représente les étapes d'un mode de réalisation.

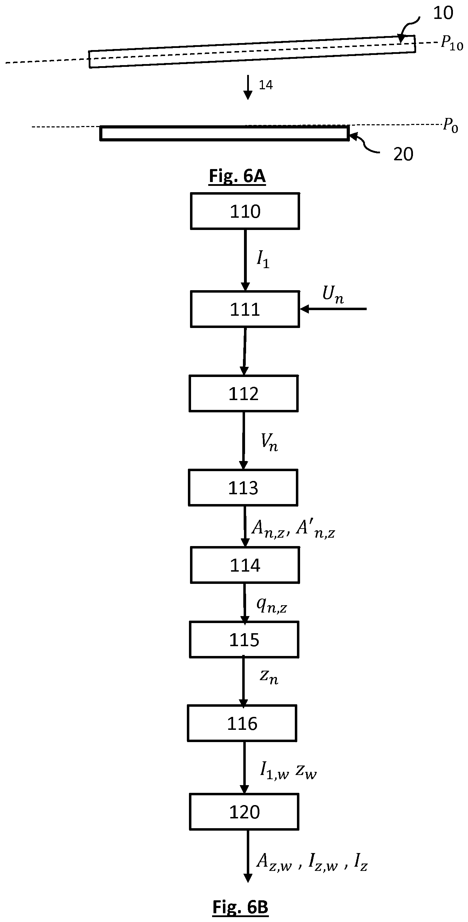

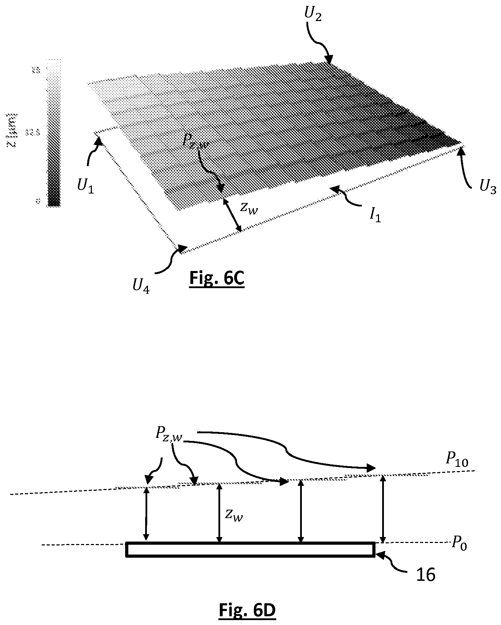

La figure 6A représente un échantillon incliné par rapport à un capteur d'image. La figure 6B montre les principales étapes d'un procédé permettant de prendre en compte l'inclinaison schématisée sur la figure 6A, de façon à obtenir des images, dites reconstruites, corrigées de cette inclinaison. Les figures 6C et 6D illustrent des étapes représentées sur la figure 6B.

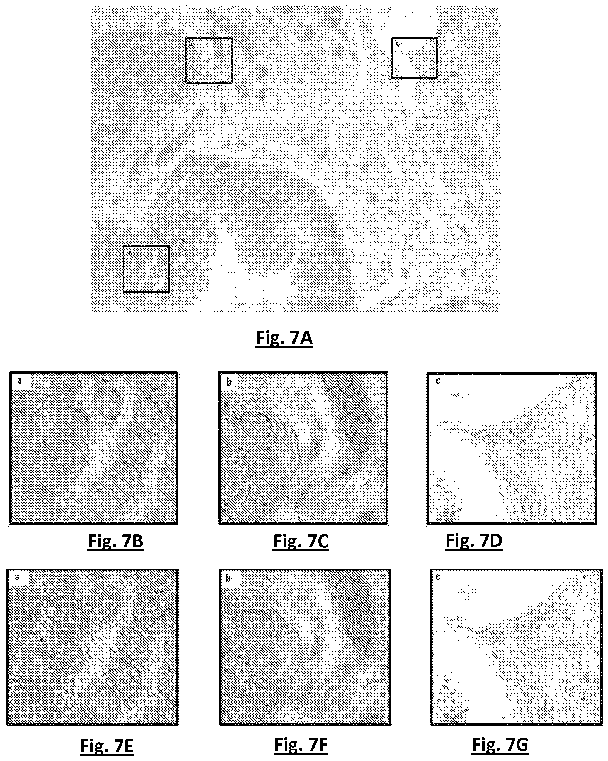

La figure 7A est une image de l'échantillon obtenue selon la première modalité, l'échantillon étant incliné par rapport à un capteur d'image. Les images 7B, 7C et 7D sont des images reconstruites sur la base de la figure 7A, sans prise en compte de l'inclinaison. Les figures 7E, 7F et 7G sont des images reconstruites sur la base de la figure 7A, avec prise en compte de l'inclinaison.

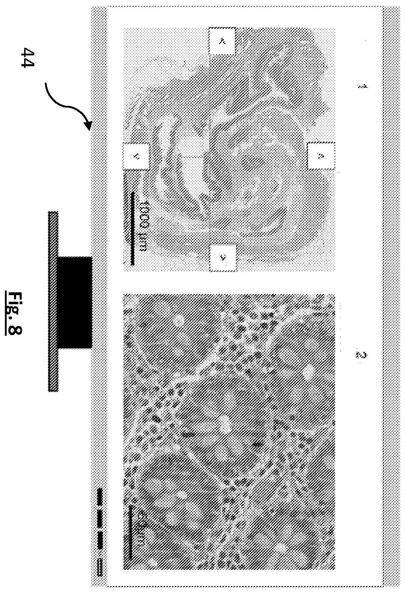

La figure 8 représente une vue d'un écran d'un dispositif selon l'invention.

## EXPOSE DE MODES DE REALISATION PARTICULIERS

Les figures 1A et 1B représentent un exemple de dispositif de microscopie bimodal selon l'invention. La figure 1A représente le dispositif selon un mode d'imagerie sans lentille, tandis que la figure 1B montre le dispositif selon un mode de microscopie classique. Le dispositif comporte une première source de lumière 11, apte à émettre une première onde lumineuse 12 se propageant vers un échantillon 10, selon un axe de propagation Z, selon une bande spectrale d'émission $\Delta\lambda$.

L'échantillon 10 est disposé sur un support d'échantillon 10s. L'échantillon peut être un milieu, par exemple un milieu liquide, dans lequel baignent des particules, ou à la surface duquel sont disposées des particules. Il peut par exemple s'agir d'un liquide biologique ou corporel. Par particule, on entend par exemple des objets dont le diamètre est inférieur à 1 mm, voire 100 $\mu$m, ou des objets inscrits dans un cercle d'un tel diamètre. Les particules peuvent être des cellules, des microorganismes, par exemple des bactéries, des spores, des microbilles. Le milieu peut également être une gélose, propice au développement de colonies bactériennes, ou un solide. L'échantillon 10 peut également être une lame de tissu destinée à une analyse histologique, ou lame d'anatomopathologie, comportant une fine épaisseur de tissu déposée sur une lame transparente. Par fine épaisseur, on entend une épaisseur de préférence inférieure à 100 $\mu$m, et de préférence inférieure à 10 $\mu$m, typiquement quelques micromètres. Une telle lame de tissu peut être obtenue selon des procédés de préparation connus, à partir d'un échantillon tissulaire prélevé par biopsie ou frottis, puis préparé de façon à se présenter sous la forme d'une fine épaisseur déposée sur une lame transparente, cette dernière servant de support. De tels procédés sont connus dans le domaine de l'histologie. Ils comportent par exemple une découpe d'un tissu congelé, ou une inclusion d'un tissu prélevé dans une matrice de paraffine. Le tissu peut alors faire l'objet d'une coloration, par exemple en utilisant un agent colorant de type HES (Hématoxyline-Eosine-Safran).

D'une façon générale, l'épaisseur de l'échantillon 10, selon l'axe de propagation Z, est de préférence comprise entre 20 μm et 500 μm. L'échantillon s'étend selon au moins un plan $P_{10}$, dit plan de l'échantillon, de préférence perpendiculaire à l'axe de propagation Z. Il est maintenu sur le support 10s à une distance d d'un premier capteur d'image 16.

De préférence, le trajet optique parcouru par la première onde lumineuse 12 avant d'atteindre l'échantillon 10 est supérieur à 5 cm. Avantageusement, la source de lumière, vue par l'échantillon, est considérée comme ponctuelle. Cela signifie que son diamètre (ou sa diagonale) est préférentiellement inférieur au dixième, mieux au centième du trajet optique entre l'échantillon et la source de lumière. La source de lumière 11 peut être, par exemple, une diode électroluminescente ou une source laser, par exemple une source laser. Elle peut être associée à diaphragme 18, ou filtre spatial. L'ouverture du diaphragme 18 est typiquement comprise entre 5 μm et 1 mm, de préférence entre 50 μm et 500 μm. Dans cet exemple, le diaphragme est fourni par Thorlabs sous la référence P150S et son diamètre est de 150 μm. Le diaphragme peut être remplacé par une fibre optique, dont une première extrémité est placée face à première la source de lumière 11 et dont une deuxième extrémité est placée en regard de l'échantillon 10.

Le dispositif peut comporter un diffuseur 17, disposé entre la source de lumière 11 et le diaphragme 18. L'usage d'un tel diffuseur permet de s'affranchir de contraintes de centrage de la source de lumière 11 par rapport à l'ouverture du diaphragme 18. La fonction d'un tel diffuseur est de répartir le faisceau lumineux, produit par la source de lumière selon un cône d'angle a. De préférence, l'angle de diffusion α varie entre 10° et 80°. La présence d'un tel diffuseur permet de rendre le dispositif plus tolérant à l'égard d'un décentrage de la source de lumière par rapport au diaphragme. Le diaphragme n'est pas nécessaire, en particulier lorsque la source de lumière est suffisamment ponctuelle, notamment lorsqu'il s'agit d'une source laser.

De préférence, la bande spectrale d'émission Δλ de l'onde lumineuse incidente 12 a une largeur inférieure à 100 nm. Par largeur de bande spectrale, on entend une largeur à mi-hauteur de ladite bande spectrale.

Le dispositif, tel que représenté sur la figure 1A, comporte un prisme 15, apte à réfléchir la première onde lumineuse incidente 12 vers l'échantillon 10. Le recours à un tel prisme permet de maintenir les sources de lumière immobiles par rapport à l'échantillon. Un tel prisme est facultatif.

Le premier capteur d'image 16 est apte à former une première image $I_1$ selon un plan de détection $P_0$. Dans l'exemple représenté, il s'agit d'un capteur d'image comportant une matrice de pixels, de type CCD ou un CMOS, et dont la surface est généralement supérieure à 10 mm². La surface de la matrice des pixels, dite surface de détection, dépend du nombre de pixels et de leur taille. Elle est généralement comprise entre 10 mm² et 50 mm². Le plan de détection $P_0$ s'étend de préférence perpendiculairement à l'axe de propagation Z de l'onde lumineuse incidente 12. La distance d entre l'échantillon 10 et la matrice de pixels du capteur d'image 16 est préférentiellement comprise entre 50 μm et 2 cm, de préférence comprise entre 100 μm et 2 mm.

On remarque l'absence d'optique de grossissement entre le premier capteur d'image 16 et l'échantillon 10. Cela n'empêche pas la présence éventuelle de microlentilles de focalisation au niveau de chaque pixel du premier capteur d'image 16, ces dernières n'ayant pas de fonction de grandissement de l'image acquise par le premier capteur d'image.

Du fait de la proximité entre le premier capteur d'image 16 et l'échantillon 10, la première image $I_1$ est acquise selon un premier champ d'observation $\Omega_1$ légèrement inférieur à l'aire du capteur d'image, c'est-à-dire typiquement compris entre 10 mm² et 50 mm². Il s'agit d'un champ d'observation élevé si on le compare au champ d'observation conféré par un objectif de microscope à fort grandissement, par exemple un objectif de grandissement supérieur à 10. Ainsi, la première image $I_1$ permet d'obtenir une information exploitable de l'échantillon selon un premier champ d'observation $\Omega_1$ élevé. Un élément important de l'invention est de profiter de ce champ d'observation élevé afin de sélectionner une zone d'intérêt ROI de l'échantillon sur ou à partir de la première image $I_1$, puis d'analyser la zone d'intérêt sélectionnée par un objectif de microscope classique 25 disposant d'un grandissement supérieur à 1, voire supérieur à 10.

Sous l'effet de la première onde lumineuse incidente 12, l'échantillon peut engendrer une onde diffractée 13, susceptible de produire, au niveau du plan de détection $P_0$, des interférences avec une partie de la première onde lumineuse incidente 12 transmise par l'échantillon. Ainsi, l'onde lumineuse 14, dite onde lumineuse d'exposition, transmise par l'échantillon 10 et à laquelle est exposé le premier capteur d'image 16, peut comprendre :

- une composante 13 résultant de la diffraction de la première onde lumineuse incidente 12 par l'échantillon ;
- une composante 12', transmise par l'échantillon, et résultant de l'absorption de la première onde lumineuse incidente 12 par l'échantillon.

Ces composantes forment des interférences dans le plan de détection. Aussi, la première image $I_1$ acquise par le capteur d'image comporte des figures d'interférences (ou figures de diffraction), chaque figure d'interférence étant générée par l'échantillon. Par exemple, lorsque l'échantillon comporte des particules, on peut associer, à chaque particule, une figure d'interférence. La première image $I_1$ permet alors de localiser les particules, de les dénombrer ou encore d'identifier une particule en se basant sur la morphologie de la figure de diffraction qui lui est associée, comme décrit par exemple dans WO2008090330. On peut alors sélectionner une région d'intérêt sur la première image $I_1$, puis effectuer une analyse plus approfondie de la région d'intérêt à l'aide de la deuxième modalité décrite ci-après, en lien avec la figure 1B.

Un processeur 40, par exemple un microprocesseur, est configuré pour traiter chaque image $I_1$ acquise par le capteur d'image 16, et permettre par exemple la sélection de la région d'intérêt *ROI* ainsi que les éventuelles opérations de reconstruction holographique ou de traitement d'image décrites dans cette demande. En particulier, le processeur est un microprocesseur relié à une mémoire programmable 42 dans laquelle est stockée une séquence d'instructions pour effectuer les opérations de traitement d'images et de calculs décrites dans cette description. Le processeur peut être couplé à un écran 44 permettant l'affichage d'images acquises par le capteur d'image 16 ou calculées par le processeur 40.

Comme précédemment décrit, la première image $I_1$ peut suffire à localiser une région d'intérêt *ROI,* qu'il semble judicieux d'analyser de façon plus approfondie. C'est par exemple le cas lorsque l'échantillon 10 comporte des particules, ces dernières pouvant faire l'objet d'une analyse plus détaillée en mettant en œuvre la deuxième modalité décrite ci-après.

Le dispositif représenté sur la figure 1A comporte une deuxième source de lumière 21, ainsi qu'un système optique 25, doté d'un grandissement supérieur à 1. La deuxième source de lumière 21 émet une deuxième onde lumineuse incidente 22 se propageant jusqu'à l'échantillon. Un deuxième capteur d'image 26 est couplé au système optique 25, le deuxième capteur 26 étant disposé dans le plan focal image du système optique de grandissement 25. Le deuxième capteur 26 permet d'obtenir une information détaillée de la région d'intérêt *ROI* de l'échantillon sélectionnée, selon un deuxième champ d'observation $\Omega_2$ réduit par rapport au premier champ d'observation $\Omega_1$. La première source de lumière 11 et la deuxième source de lumière 21 peuvent être disposées face à l'échantillon 10, auquel cas le prisme 15 n'est pas utile.

L'échantillon peut être déplacé relativement par rapport au premier capteur d'image 16 et au système optique 25, de façon à être disposé :

- soit selon une première modalité d'observation en grand champ, à l'aide du premier capteur d'image 16, comme précédemment décrit, cette première modalité étant montrée sur la figure 1A ;
- soit selon une deuxième modalité d'observation en grandissement, à l'aide du deuxième capteur d'image 26. Dans cette deuxième modalité, l'échantillon est disposé dans le plan focal objet du système optique 25. Autrement dit, dans la deuxième modalité, l'échantillon est disposé, par rapport au deuxième capteur d'image 26, de façon à ce que ce dernier puisse acquérir une deuxième image $I_2$ de l'échantillon 10, nette, à travers le système optique 25. La deuxième modalité est représentée sur la figure 1B.

De préférence, l'échantillon 10 est maintenu immobile, tandis que le capteur d'image 16 et le système optique 25 sont déplacés par rapport à l'échantillon, entre les deux modalités d'observation. On a représenté, sur les figures 1A et 1B, une platine mobile 30, supportant le premier capteur d'image 16 et le système optique 25, et permettant leur déplacement par rapport à l'échantillon 10. De façon alternative, l'échantillon est monté sur un support 10s mobile, permettant de le déplacer soit face au premier capteur d'image 16, soit face au système optique 25. Comme illustré sur la figure 1B, la platine mobile peut être apte à permettre un déplacement parallèlement à l'axe de propagation de la lumière Z, ou dans un plan XY perpendiculaire à cet axe. Le processeur 40 peut commander la platine mobile 30, de façon à déterminer, dans chaque modalité, une position relative de l'échantillon 10 par rapport au premier capteur d'image 16 ou par rapport au système optique 25.

Le système optique 25 est en particulier un objectif de microscope, dont le grandissement est de préférence supérieur ou égal à 5 voire à 10. Le dispositif peut comprendre plusieurs systèmes optiques 25, 25', dotés de grandissements différents. Dans la deuxième modalité, l'échantillon est illuminé par la deuxième source de lumière 21, par exemple une source de lumière blanche. La deuxième source de lumière 21 n'est pas nécessairement différente de la première source de lumière 11. La deuxième image $I_2$, acquise par le deuxième capteur d'image, à travers l'objectif 25, permet d'obtenir une représentation détaillée de la région d'intérêt *ROI* identifiée sur la première image $I_1$.

De préférence, le déplacement relatif du premier capteur d'image 16 et du système optique 25 est calculé automatiquement par le processeur 40, en fonction de la région d'intérêt *ROI* de l'échantillon sélectionnée par un opérateur à partir de la première image $I_1$. Par exemple, la première image $I_1$ peut être affichée sur l'écran 44. L'opérateur effectue alors une sélection de la région d'intérêt *ROI* à l'aide d'un sélecteur 41, ce dernier étant notamment un accessoire périphérique du processeur 40, de type souris d'ordinateur ou un clavier. La sélection de la région d'intérêt entraîne un actionnement de la platine 30 pour placer l'échantillon selon la deuxième modalité d'analyse, c'est-à-dire face à l'objectif 25. Le sélecteur permet une sélection manuelle de la région d'intérêt *ROI* de l'échantillon, mais une sélection automatique peut être réalisée par un processeur, par exemple le processeur 40, comme décrit ultérieurement, en lien avec les figures 4A à 4C.

On comprend que la combinaison de ces deux modalités permet un gain de temps lors de l'analyse de l'échantillon, en concentrant l'analyse fine, obtenue par l'objectif 25, sur un nombre limité de régions d'intérêt, ces dernières étant déterminées par l'image $I_1$ grand champ acquise par la première modalité. On évite alors un balayage inutile et coûteux en temps de la totalité de la surface d'un échantillon à l'aide d'un objectif de microscope.

La figure 1C représente un mode de réalisation selon lequel la première source de lumière 11 comporte trois sources de lumière élémentaires $11_1$, $11_2$ et $11_3$, émettant respectivement dans une première bande spectrale $\Delta\lambda_1$ = 450nm - 465 nm, une deuxième bande spectrale $\Delta\lambda_2$ = 520nm - 535 nm et une troisième bande spectrale $\Delta\lambda_3$ = 620nm - 630 nm. Ces trois sources de lumière élémentaires sont ici des diodes électroluminescentes. Dans cet exemple, la source de lumière est une diode électroluminescente fournie par CREE sous la référence Xlamp MCE. Les trois diodes électroluminescentes élémentaires $11_1$, $11_2$ et $11_3$ la composant sont activées simultanément. De façon alternative, ces diodes électroluminescentes peuvent être activées successivement. Avec une telle source de lumière, le diffuseur 17 est particulièrement utile, car il autorise un certain décentrage d'une ou plusieurs sources de lumière élémentaires.

Le premier capteur d'image 16 peut comporter un filtre de Bayer, de telle sorte que chaque pixel est sensible à une bande spectrale choisie parmi le bleu, le rouge ou le vert. Ainsi, lorsque l'échantillon 10 est exposé à une telle première source de lumière 11, le premier capteur d'image 16 acquiert une première image $I_1$ pouvant être décomposée en :

- une première image $I_1(\Delta\lambda_1)$ dans la première bande spectrale $\Delta\lambda_1$ d'émission de la première diode électroluminescente $11_1$, cette image étant formée à partir des pixels exposés à une longueur d'onde transmise par le filtre bleu du filtre de Bayer;
- une première image $I_1(\Delta\lambda_2)$ dans la deuxième bande spectrale $\Delta\lambda_2$ d'émission de la deuxième diode électroluminescente $11_2$, cette image étant formée à partir des pixels exposés à une longueur d'onde transmise par le filtre vert du filtre de Bayer;
- une première image $I_1(\Delta\lambda_3)$ dans la troisième bande spectrale $\Delta\lambda_3$ d'émission de la troisième diode électroluminescente $11_3$, cette image étant formée à partir des pixels exposés à une longueur d'onde transmise par le filtre rouge du filtre de Bayer.

D'une façon générale, selon ce mode de réalisation, le premier capteur d'image 16 permet l'acquisition de premières images $I_1(\Delta\lambda_i)$ de l'échantillon 10 dans différentes bandes spectrales $\Delta\lambda_i$. Chaque première image $I_1(\Delta\lambda_i)$ est représentative d'une onde lumineuse $14_i$, à laquelle est exposé le premier capteur d'image 16, dans

chaque bande spectrale $\Delta\lambda_i$. De préférence, il n'y a pas de recouvrement entre les différentes bandes spectrales ; un recouvrement négligeable, par exemple concernant moins de 25%, mieux moins de 10% de l'intensité lumineuse émise, est toutefois envisageable.

D'autres configurations sont possibles, par exemple l'utilisation d'un capteur d'image monochrome, acquérant une première image $I_1(\Delta\lambda_i)$ de l'échantillon lorsque ce dernier est successivement illuminé par une onde incidente $12_i$, et cela dans différentes bandes spectrales $\Delta\lambda_i$. Chaque onde incidente $12_i$ peut être émise par une source de lumière $11_i$ émettant dans une desdites bandes spectrales, ou par une source de lumière blanche filtrée par un filtre optique dont la bande passante correspond à ladite bande spectrale $\Delta\lambda_i$.

La figure 1D représente un mode de réalisation dans lequel la première source 11 est une source laser, par exemple une diode laser. Dans une telle configuration, le diffuseur 17 et le filtre spatial 18 ne sont pas nécessaires.

La figure 1E représente un mode de réalisation dans lequel la platine 30 prend la forme d'une tourelle, sur laquelle sont fixés un premier capteur d'image 16, supporté par un support de capteur 16s, ainsi que deux objectifs 25, 25' ayant des grandissements différents. La tourelle est apte à tourner de façon à placer le premier capteur 16 ou l'un des objectifs face à l'échantillon 10.

La figure 2A représente les principales étapes d'un procédé d'observation d'un échantillon tel que précédemment décrit. Ces étapes sont :

Etape 100 : illumination de l'échantillon 10 à l'aide de la première source de lumière 11, l'échantillon étant disposé face au premier capteur d'image 16.

Etape 110 : acquisition d'une première image $I_1$ de l'échantillon 10 à l'aide du premier capteur d'image 16.

Etape 130 : sélection, manuelle ou automatique, d'une zone d'intérêt *ROI* sur la première image $I_1$.

Etape 140 : déplacement relatif de l'échantillon 10 par rapport à l'objectif 25, de façon à disposer la zone d'intérêt *ROI* l'échantillon 10 face à cet objectif.

Etape 150 : illumination de l'échantillon 10 à l'aide de la deuxième source de lumière 21.

Etape 160 : acquisition d'une deuxième image $I_2$ représentant la zone d'intérêt *ROI* à l'aide du deuxième capteur d'image 26, à travers l'objectif 25.

Etape 170 : sortie d'algorithme ou déplacement relatif de l'échantillon par rapport au premier capteur d'image 16, de façon à disposer l'échantillon face au premier capteur d'image 16.

Lorsque le nombre d'éléments diffractants de l'échantillon augmente, la première image $I_1$ acquise par le premier capteur d'image 16 peut ne pas permettre une sélection fiable de la région d'intérêt. Cela peut être le cas lorsque l'échantillon comporte des particules et que la concentration des particules est élevée. C'est également le cas lorsque l'échantillon est une fine lame de tissu telle que précédemment décrite. Dans ce cas, la région d'intérêt n'est pas sélectionnée sur la première image $I_1$, mais sur une image $I_z$ dite reconstruite à partir de la première image. Un tel mode de réalisation est représenté sur la figure 2B. Les étapes 100, 110, 140, 150, 160 et 170 sont identiques à celles décrites en lien avec la figure 2A. Le procédé comporte les étapes suivantes :

Etape 120 : détermination d'une image $I_z$, dite reconstruite, représentative de l'échantillon. Cette image est obtenue par l'application d'un opérateur de propagation holographique h, tel que décrit ci-dessous, à la première image $I_1$, de façon à calculer une image complexe $A_z$ représentant l'amplitude complexe de l'onde lumineuse d'exposition 14 selon une surface s'étendant sensiblement parallèlement au plan de détection $P_0$, à une distance z, dite distance de reconstruction, de ce dernier. L'image reconstruite $I_z$ est obtenue à partir du module et/ou de la phase de l'amplitude complexe $A_z$ ainsi calculée. Par sensiblement parallèlement, on entend parallèlement, une tolérance angulaire de plus ou moins 10° ou 20° étant admise.

Etape 130 : sélection, manuelle ou automatique, d'une zone d'intérêt ROI sur l'image reconstruite $I_z$.

Dans cette description, le terme image reconstruite désigne une image $I_z$ formée à partir du module ou de la phase de l'onde lumineuse d'exposition 14 selon une surface de reconstruction parallèle au plan de détection. L'image reconstruite est déterminée à partir du module ou de la phase de l'image complexe $A_z$. Cette surface peut être un plan $P_z$, situé à une distance de reconstruction z du plan de détection $P_0$. Il peut également s'agir de plusieurs plans, parallèles au plan de détection, et situés à différentes distances $z_w$ du plan de détection, de façon à prendre en compte une inclinaison du plan $P_{10}$ selon lequel s'étend l'échantillon 10 par rapport au plan de détection $P_0$.

L'image reconstruite $I_z$ est obtenue en appliquant un opérateur de propagation holographique h à partir de la première image $I_1$ acquise par le premier capteur d'image 16. Un tel procédé, désigné par le terme reconstruction holographique, permet notamment de reconstruire une image du module ou de la phase de l'onde lumineuse d'exposition 14 dans un plan de reconstruction $P_z$ parallèle au plan de détection $P_0$, et notamment dans le plan $P_{10}$ selon lequel s'étend l'échantillon. Pour cela, on effectue un produit de convolution de la première image $I_1$ par un opérateur de propagation h. Il est alors possible de reconstruire une expression complexe $A$ de l'onde lumineuse 14 en tout point de coordonnées $(x,y,z)$ de l'espace, et en particulier dans un plan de reconstruction $P_z$ situé à une distance de reconstruction $|z|$ du capteur d'image 16, dite distance de reconstruction, ce plan de reconstruction étant de préférence le plan de l'échantillon $P_{10}$, avec : $A(x, y, z) = I_1(x,y,z) * h$ * désignant l'opérateur produit de convolution. Dans la suite de cette description, les coordonnées $(x,y)$ désignent une position radiale dans un plan perpendiculaire à l'axe de propagation Z. La coordonnée $z$ désigne une coordonnée selon l'axe de propagation Z. L'expression complexe $A$ est une grandeur complexe dont l'argument et le module sont respectivement représentatifs de la phase et de l'intensité de l'onde lumineuse 14 d'exposition. Le produit de convolution de la première image $I_1$ par l'opérateur de propagation h permet d'obtenir une image complexe $A_z$ représentant une distribution spatiale de l'expression complexe $A$ dans un plan de reconstruction $P_z$, s'étendant à une coordonnée z du plan de détection $P_0$. Dans cet exemple, le plan de détection $P_0$ a pour équation $z = 0$. L'image complexe $A_z$ correspond à une image complexe de l'onde d'exposition 14 dans le plan de reconstruction $P_z$. Elle représente également une distribution spatiale bidimensionnelle des propriétés optiques de l'onde d'exposition 14.

L'opérateur de propagation h a pour fonction de décrire la propagation de la lumière entre le capteur d'image 16 et un point de coordonnées $(x,y,z)$, situé à une distance $|z|$ du premier capteur d'image. Il est alors possible de déterminer le module $M(x,y,z)$ et/ou la phase $\varphi(x, y, z)$ l'onde lumineuse 14, à cette distance $|z|$, dite distance de reconstruction, avec :

- $M(x,y,z) = abs[A(x,y,z)]$;
- $\varphi(x,y,z) = arg[A(x,y,z)]$;

Les opérateurs *abs* et *arg* désignent respectivement le module et l'argument.

L'opérateur de propagation est par exemple la fonction de Fresnel-Helmholtz, telle que :

$$h(x, y, z) = \frac{1}{j\lambda z} e^{j2\pi \frac{z}{\lambda}} \exp\left(j\pi \frac{x^2 + y^2}{\lambda z}\right).$$

Autrement dit, l'expression complexe $A$ de l'onde lumineuse 14, en tout point de coordonnées $(x,y,z)$ de l'espace, est telle que : $A(x,y,z) = M(x,y,z)e^{j\varphi(x,y,z)}$. Il est possible de former des images, dites images reconstruites, $M_z$ et $\varphi_z$ représentant respectivement le module ou la phase de l'expression complexe $A$ dans un plan $P_z$ situé à une distance $|z|$ du plan de détection $P_0$, avec $M_z$ = mod $(A_z)$ et $\varphi_z$ = arg$(A_z)$.

Cependant, une simple application de l'opérateur de propagation h sur la première image conduit généralement à l'obtention d'une image complexe $A_z$ affectée d'un bruit de reconstruction important. Cela provient du fait que la première image $I_1$, acquise par le capteur d'image 16, ne comporte pas d'information quant à la phase de l'onde lumineuse d'exposition 14. On peut alors mettre en œuvre des algorithmes itératifs, de façon à estimer progressivement la phase de l'onde lumineuse d'exposition 14 dans le plan de détection $P_0$, ce qui permet ensuite d'obtenir une image complexe $A_z$ de l'onde lumineuse 14 plus exacte dans un plan de reconstruction $P_z$.

Les inventeurs ont développé un algorithme itératif, décrit dans la publication S. N. A. Morel, A. Delon, P. Blandin, T. Bordy, O. Cioni, L. Hervé, C. Fromentin, J. Dinten, and C. Allier, "Wide-Field Lensfree Imaging of Tissue Slides," in Advanced Microscopy Techniques IV; and Neurophotonics II, E. Beaurepaire, P. So, F. Pavone, and E. Hillman, eds., Vol. 9536 of SPIE Proceedings (Optical Society of America, 2015) ainsi que dans la demande de brevet FR1554811 déposée le 28 mai 2015, et plus précisément dans les étapes 100 à 500 décrites dans cette demande. Selon cet algorithme, l'échantillon est illuminé successivement ou simultanément dans différentes bandes spectrales $\Delta\lambda_i$, à l'aide d'une source de lumière 11 telle que décrite sur la figure 1C. On acquiert, dans le plan de détection $P_0$, une première image $I_1(\Delta\lambda_i)$ dans chaque bande spectrale. L'algorithme permet d'obtenir une image complexe $A_z(\Delta\lambda_i)$ de l'onde lumineuse 14, dans un plan de reconstruction $P_z$, dans chaque bande spectrale $\Delta\lambda_i$. Les images complexes $A_z(\Delta\lambda_i)$ ainsi obtenues, dans chaque bande spectrale $\Delta\lambda_i$, peuvent être combinées, par exemple en effectuant une moyenne, en chaque pixel, de leur module et de leur phase, ce qui permet de former une image complexe $A_z$. Alternativement, l'image reconstruite $A_z$ est obtenue à partir du module ou de la phase d'une image complexe $A_z(\Delta\lambda_i)$ dans une des bandes spectrales $\Delta\lambda_i$. Les principales étapes de cet algorithme sont représentées sur la figure 2C.

Etape 121 : initialisation, à partir de la première image $I_1(\Delta\lambda_i)$ acquise par le capteur d'image 16 dans chaque bande spectrale $\Delta\lambda_i$. Cela correspond à l'étape 100 décrite dans la demande de brevet FR1554811 précédemment évoquée. Cette initialisation permet d'obtenir une image complexe $A_0(\Delta\lambda_i)$ initiale, représentative de l'onde lumineuse d'exposition 14 dans le plan de détection $P_0$, dans chaque bande spectrale $\Delta\lambda_i$.

Etape 122 : propagation de chaque première image $I_1(\Delta\lambda_i)$ dans un plan de reconstruction $P_z$, situé à la distance de reconstruction z du plan de détection $P_0$. Cela correspond à l'étape 200 décrite dans la demande de brevet FR1554811. On obtient alors une image complexe $A_z(\Delta\lambda_i)$ représentant l'onde d'exposition 14, dans le plan de reconstruction $P_z$, et dans chaque bande spectrale $\Delta\lambda_i$. Le plan de reconstruction est de préférence le plan de l'échantillon $P_{10}$.

Etape 123 : combinaison de chaque image complexe $A_z(\Delta\lambda_i)$ de façon à obtenir une fonction de pondération dans le plan de reconstruction $P_z$. Cela correspond à l'étape 300 décrite dans la demande de brevet FR1554811. La fonction de pondération peut être une somme pondérée de chaque image complexe $A_z(\Delta\lambda_i)$.

Etape 124 : propagation de la fonction de pondération dans le plan de détection $P_0$, en appliquant l'opérateur de propagation h à la fonction de pondération. Cela correspond à l'étape 400 décrite dans la demande de brevet FR1554811.

Etape 125 : mise à jour de l'image complexe $A_0(\Delta\lambda_i)$, représentative de l'onde lumineuse d'exposition 14 dans le plan de détection $P_0$, dans chaque bande spectrale $\Delta\lambda_i$. Cette mise à jour est effectuée à partir de la fonction de pondération propagée dans le plan de détection $P_0$ lors de la précédente étape. La phase de l'image complexe $A_0(\Delta\lambda_i)$, dans chaque bande spectrale, $\Delta\lambda_i$ est mise à jour en étant remplacée par la phase de la fonction de pondération propagée dans le plan de détection $P_0$. Cela correspond à l'étape 500 décrite dans la demande de brevet FR1554811.

Chaque image complexe, dans le plan de détection, ainsi mise à jour, est ensuite propagée dans le plan de reconstruction, selon l'étape 122. Les étapes 122 à 125 sont mises en œuvre de façon itérative jusqu'à ce que la phase de l'image complexe dans le plan de détection $P_0$ ou dans le plan de l'échantillon $P_{10}$ soit considérée comme correctement estimée.

A partir de l'image complexe $A_z(\Delta\lambda_i)$ obtenue, dans le plan de reconstruction $P_z$, dans chaque bande spectrale $\Delta\lambda_i$, on peut obtenir une image reconstruite $I_z$, par exemple :

- en réalisant une moyenne du module ou de la phase de l'image complexe $A_z(\Delta\lambda_i)$ dans chaque bande spectrale $\Delta\lambda_i$ : l'image reconstruite $I_z$ est alors une image en niveaux de gris;

- en combinant le module et/ou la phase de l'image complexe $A_z(\Delta\lambda_i)$ dans chaque bande spectrale $\Delta\lambda_i$, ce qui permet d'obtenir une image reconstruite $I_z$ en couleur représentant le module ou la phase.

D'autres algorithmes sont utilisables pour obtenir une image complexe représentant l'onde d'exposition 14, dans une surface de reconstruction $P_z$ faisant face au premier capteur d'image 16. De tels algorithmes sont par exemple décrits dans la demande de brevet FR1652500 déposée le 23 mars 2016. De tels algorithmes peuvent être mis en œuvre à partir d'une première source de lumière 11 émettant une première onde lumineuse 12 dans une seule bande spectrale, sans sortir du cadre de l'invention.

La figure 2D représente une image reconstruite en mettant en œuvre l'algorithme décrit en lien avec la figure 2C. Elle représente une distribution spatiale du module d'un échantillon composé de cellules Jurkat flottantes dans un tampon liquide PBS, acronyme de Phosphate Buffer Saline, signifiant tampon phosphate salin. Une tâche d'encre a été réalisée, de façon à former un repère visuel. On notera que cette image reconstruite permet d'observer l'échantillon selon un champ d'observation élevé et une précision acceptable. Elle permet une sélection aisée d'une zone d'intérêt *ROI* dans l'échantillon. Les figures 2E et 2F représentent des observations de chaque zone d'intérêt à l'aide d'un objectif de grandissement 25, selon la deuxième modalité d'observation.

Les conditions expérimentales de cet essai sont les suivantes :

- source de lumière 11: CREE référence Xlamp MCE ;
- premier capteur d'image : IDS MT9J003 monochrome, 3840 * 2748 pixels, chaque pixel mesurant 1.67 mm de côté, soit une surface de détection de 6.4 * 4.6 mm (29.4 mm$^2$) ;
- distance *d* entre l'échantillon 10 et le premier capteur d'image 16 : 1.5 mm ;
- filtre spatial : ouverture 150 $\mu$m ;
- objectif 25 : Olympus - grandissement 20 ;
- deuxième capteur d'image 26 : Mightex SE-C050-U - capteur couleur comprenant 2560 * 1920 pixels.

Selon un mode de réalisation, la région d'intérêt *ROI* sélectionnée à partir de la première image $I_1$ fait l'objet d'une reconstruction, de manière à obtenir une image reconstruite, représentative de l'onde lumineuse 14, uniquement à partir de la région d'intérêt.

La figure 2G une image représentant une lame de tissu obtenu sur une souris et coloré selon une coloration HES. L'image de la figure 2G est une image reconstruite $I_z$ représentant le module d'une amplitude complexe reconstruite, selon l'algorithme décrit en lien avec la figure 2C, dans le plan de la lame de tissu (plan de l'échantillon). La figure 2H représente une région d'intérêt de cette lame, identifiée sur l'image reconstruite $I_z$ et représentée par un contour noir sur l'image 2G, et observée à l'aide d'un objectif de grandissement x20.

Selon une variante, on obtient une image reconstruite $I_z$ à partir d'une première image dite intermédiaire $I'_1$, obtenue en appliquant un bining à la première image $I_1$. Le fait d'effectuer une reconstruction sur l'image intermédiaire $I'_1$ permet de réduire le temps de calcul, et d'obtenir une image reconstruite $I_z$ plus rapidement. A partir de cette image reconstruite, une région d'intérêt *ROI* est sélectionnée. Il est alors possible d'obtenir une image reconstruite d'intérêt $I_{z,ROI}$, limitée à la région d'intérêt préalablement sélectionnée. Cette image reconstruite d'intérêt est obtenue en appliquant des algorithmes de reconstruction holographique, tels que précédemment décrits ou cités, non pas sur la totalité de la première image $I_1$, mais uniquement sur la partie de la première image $I_{1,ROI}$ correspondant à la région d'intérêt sélectionnée. Les figures 3A, 3B et 3C correspondent à un tel mode de réalisation. Sur la figure 3A, on a représenté une image reconstruite en considérant une image intermédiaire $I'_1$ obtenue en appliquant un bining 4*4 à l'image acquise $I_1$ par le premier capteur d'image 16. On obtient alors une image reconstruite $I_z$ de qualité moindre que celle représentée sur la figure 2D, mais suffisante pour permettre la sélection de régions d'intérêt *ROI*. Lorsque l'opérateur sélectionne une région d'intérêt *ROI,* la région d'intérêt sélectionnée fait l'objet d'une reconstruction en ne se basant que la partie de l'image acquise $I_1$ délimitée par la région d'intérêt. On aboutit ainsi à une image reconstruite d'intérêt $I_{z,ROI}$ plus précise, la dimension réduite de la région d'intérêt *ROI* autorisant le recours à une reconstruction basée sur une partie $I_{1,ROI}$ de la première image $I_1$ de résolution spatiale élevée. Les figures 3B et 3C représentent des images reconstruites d'intérêt correspondant aux régions d'intérêt matérialisées sur la figure 3A.

La figure 3D illustre les principales étapes de cette variante. L'étape 110 correspond à l'acquisition de la première image $I_1$ par le premier capteur d'image. L'étape 119 est l'application d'un opérateur, par exemple un bining, de façon à obtenir une image intermédiaire $I'_1$ couvrant un champ d'observation similaire à la première image, mais comportant un nombre de pixels inférieur au nombre de pixels de la première image $I_1$. De préférence, l'image intermédiaire $I'_1$ comporte au plus deux fois moins de pixels que la première image $I_1$, voire au moins 4 fois ou 10 fois moins de pixels que la première image $I_1$.

L'étape 120 correspond à la reconstruction de l'expression complexe de l'onde lumineuse d'exposition 14, selon un plan de reconstruction $P_z$, non pas à partir de la première image $I_1$, mais à partir de l'image intermédiaire $I'_1$. On obtient ainsi une image complexe $A_z$, de laquelle on extrait l'image reconstruite $I_z$, dans le plan de reconstruction $P_z$, à partir du module et/ou de la phase de l'image complexe $A_z$.

L'étape 130 est la sélection d'une région d'intérêt *ROI,* sur l'image reconstruite $I_z$.

L'étape 132 correspond à sélection d'une partie $I_{1,ROI}$ de la première image correspondant à la région d'intérêt *ROI* sélectionnée lors de l'étape précédente.

L'étape 134 est une reconstruction de l'expression complexe de l'onde lumineuse d'exposition 14, selon un plan de reconstruction $P_z$, à partir de la partie $I_{1,ROI}$ de la première image $I_1$ correspondant à la région d'intérêt *ROI* sélectionnée lors de l'étape 130. On obtient ainsi une image d'intérêt reconstruite $I_{z,ROI}$ dans le plan de reconstruction $P_z$, à partir du module et/ou de la phase de l'image complexe, dite image complexe d'intérêt $A_{z,ROI}$ reconstruite dans la région d'intérêt.

Les étapes 140 à 170, telles que précédemment décrites, peuvent être ensuite mises en œuvre, de façon à obtenir une image de la région d'intérêt sélectionnée lors de l'étape 130 à travers l'objectif 25, à l'aide du deuxième capteur d'image 26. Cependant, dans certains cas, l'image d'intérêt reconstruite peut être suffisante pour obtenir une représentation correcte de l'échantillon 10.

Selon un mode de réalisation, la région d'intérêt *ROI* de l'échantillon n'est pas sélectionnée manuellement, à l'aide d'un sélecteur 41 de type souris ou clavier, mais automatiquement, en mettant en œuvre un algorithme de traitement d'image, à l'aide d'un processeur, par exemple le processeur 40. La sélection de la région d'intérêt est réalisée en fonction d'un critère de sélection préalablement déterminé. Ce critère est par exemple un critère morphologique, auquel cas une région d'intérêt est automatiquement détectée en cas de correspondance avec le critère morphologique. On a représenté, sur la figure 4A, une image $I_z$ reconstruite dite de phase, représentant la phase de l'amplitude complexe de l'onde lumineuse d'exposition selon un plan de reconstruction, ce dernier coïncidant avec le plan de l'échantillon. L'échantillon est, dans cet exemple, constitué de cellules dont certaines se divisent. Les inventeurs ont observé que la division cellulaire peut être tracée par une brusque augmentation de la phase. Il est alors possible de détecter automatiquement, dans l'image reconstruite $I_z$, les pixels franchissant un certain seuil d'intensité, et de définir une région d'intérêt autour de tels pixels. Un simple seuillage en intensité de l'image de phase suffit à localiser automatiquement les régions d'intérêt. Chaque région d'intérêt peut alors être successivement observée de façon plus fine, notamment à l'aide de la deuxième modalité. Sur la figure 4A, les régions d'intérêt sont matérialisées par un contour blanc.

On a représenté, sur la figure 4B, une image d'un frottis sanguin coloré en Giesma, dans lequel on recherche des globules blancs. Il s'agit d'une image reconstruite $I_z$ représente la phase de l'amplitude complexe de l'onde lumineuse d'exposition 14, selon le plan de l'échantillon. Dans une telle situation, on recherche des régions d'intérêt contenant une particule d'intérêt, en l'occurrence un globule blanc. L'identification des régions d'intérêt est réalisée selon une analyse morphologique basée sur un critère de taille et de niveau de gris, les globules blancs apparaissant sous la forme de taches de niveau de gris homogène et sombre, d'une taille prédéterminée. Selon un tel critère d'intérêt, les régions d'intérêt peuvent être automatiquement détectées, ces dernières étant matérialisées par un contour noir en pointillés.

On a représenté, sur la figure 4C, des cellules infectées d'un tissu. On a préalablement appliqué un agent de coloration immunohistochimique, spécifique au virus d'Epstein Bar (ou EBV). Les cellules infectées par l'EBV se présentent sous la forme de taches sombres sur l'image de la figure 4C. Il s'agit d'une image reconstruite $I_z$ représente le module de l'amplitude complexe de l'onde lumineuse d'exposition, selon le plan de l'échantillon. Sur une telle image, les cellules infectées se présentent sous la forme de taches sombres, qu'il est simple d'identifier par un seuillage. Selon un tel critère d'intérêt, les régions d'intérêt peuvent être automatiquement détectées, ces dernières étant matérialisées par un contour noir en pointillés.

Par ailleurs, comme décrit en lien avec l'art antérieur, la première image $I_1$, ou l'image $I_z$ reconstruite avec la première image, peut être utilisée pour effectuer un suivi de la position, ou tracking, de particules mobiles. A chaque particule peut être associée une région d'intérêt, cette dernière pouvant être analysée périodiquement à l'aide de la deuxième modalité.

Selon un mode de réalisation, décrit sur la figure 5, la première image $I_1$ est également utilisée pour déterminer la distance entre l'échantillon 10 et le premier capteur d'image 16 (ou le plan de détection $P_0$), au niveau de la région d'intérêt $ROI$. Pour cela, un processeur, par exemple le processeur 40, met en œuvre un algorithme de focalisation numérique. Un tel algorithme est connu de l'homme du métier. Les principales étapes sont décrites en lien avec la figure 5.

Etape 136 : La première image $I_1$, ou une partie de la première image correspondant à la région d'intérêt $ROI$, est propagée par un opérateur de propagation numérique $h$, tel que précédemment décrit, selon une plusieurs plans de reconstruction $P_z$, chaque plan de reconstruction s'étendant à une distance $z$ différente du plan de détection $P_{10}$. On obtient alors une expression complexe de l'onde lumineuse 14 selon ces différents plans de reconstruction $P_z$, formant ainsi autant d'images complexes $A_z$. Une pile d'images complexes est ainsi obtenue. A partir de chaque image complexe $A_z$, on établit une image de reconstruction $A'_z$ représentant le module et/ou de la phase de l'expression complexe dans chaque plan de reconstruction $P_z$ considéré.

Etape 137 : Un indicateur de netteté $q_z$ est affecté à chaque image de reconstruction $A'_z$. L'indicateur de netteté $q_z$ peut être un indicateur quantifiant une dispersion de chaque image $A'_z$, par exemple un écart type ou une variance. Il peut également être défini en convoluant chaque image de reconstruction par un opérateur de Sobel. Par exemple on peut définir un opérateur de Sobel $S_x$ selon l'axe X et un opérateur de Sobel $S_y$ selon l'axe Y. Si $(x, y)$ désignent les pixels de l'image de reconstruction $A'_z$, l'indicateur de netteté $q_z$ associé à chaque image de reconstruction $A'_z$ peut alors être tel que

$$q_z = \sum_{x,y} (A'_z * S_x)^2 + \left( A'_z * S_y \right)^2$$

On peut prendre : $S_x = \begin{bmatrix} -1 & 0 & 1 \\ -2 & 0 & 2 \\ -1 & 0 & 1 \end{bmatrix}$ et

$S_y = \begin{bmatrix} 1 & 2 & 1 \\ 0 & 0 & 0 \\ -1 & -2 & -1 \end{bmatrix}$

Etape 138 : L'évolution de l'indicateur de netteté $q_z$ en fonction de la profondeur permet d'identifier la distance correspondant effectivement à la distance $z_{ROI}$ entre le plan de détection $P_0$ et l'échantillon, au niveau de la région d'intérêt $ROI$. En fonction de l'indicateur de netteté retenu, la distance $z_{ROI}$ correspond généralement à un minimum ou un maximum, selon l'axe Z, de la valeur de l'indicateur de netteté. La distance $z_{ROI}$ est alors utilisée, lors de l'étape 140, de façon à disposer automatiquement la région d'intérêt *ROI* de l'échantillon selon le plan focal de l'objectif 25. On évite alors, ou on limite, un réglage manuel de la focalisation de l'objectif 25 avant l'acquisition de la deuxième image $I_2$.

Les images complexes $A_z$ formant la pile d'images complexes peuvent être obtenues à partir d'une image complexe, dite initiale, $A_{z=d}$ formée à une distance $d$ établie a priori entre le premier capteur d'image 16 et l'échantillon. Cette image complexe initiale est obtenue en mettant en œuvre un algorithme de reconstruction itératif, comme précédemment décrit. Elle est ensuite propagée dans les différents plans de reconstruction $P_z$ par une simple convolution par un opérateur de propagation $h$. Par exemple, une image complexe $A_{z'}$ dans le plan de reconstruction $P_{z'}$ s'obtient simplement par l'opération : $A_{z'} = A_{z=d} * h_{d,z'}$ où $h_{d,z'}$ représente un opérateur de propagation représentant la propagation de la lumière entre le plan $P_{z=d}$ et le plan $P_{z=z'}$. La distance entre deux plans de propagation adjacents est déterminée en fonction de la précision avec laquelle on souhaite déterminer la distance $z_{ROI}$ entre le plan de détection $P_0$ et la région d'intérêt *ROI* de l'échantillon.

L'un des intérêts de la première modalité réside dans le premier champ observé, ce dernier étant étendu par rapport au champ observé par un objectif de microscope. Cependant, dans un tel champ, l'échantillon peut ne pas être rigoureusement parallèle au capteur d'image 16, comme représenté sur la figure 6A. Aussi, lors de l'application de l'algorithme de reconstruction, faisant l'objet de l'étape 120, une distance de reconstruction $z$ peut être optimale pour une partie de l'échantillon, mais pas pour une autre partie. Cela peut conduire à une dégradation de la résolution spatiale de l'image reconstruite $I_z$. Les inventeurs ont en effet constaté qu'il était optimal que le plan de reconstruction $P_z$ soit le plan $P_{10}$ selon lequel s'étend l'échantillon 10. Aussi, si la distance de reconstruction $z$ ne correspond pas à la distance entre le plan de détection et le plan de l'échantillon, la qualité de la reconstruction est dégradée.

Afin de résoudre ce problème, il est proposé de mettre en œuvre l'étape 120 en considérant non pas une seule distance de propagation $z$, correspondant à la distance entre le plan de l'échantillon $P_{10}$ et le plan de détection $P_0$, mais de tenir compte d'une éventuelle variation de la distance entre l'échantillon et le plan de détection. Pour cela, préalablement à l'étape 120, l'image $I_1$, acquise par le premier capteur d'image 16, peut être partitionnée en différentes parties élémentaires $I_{1,w}$, à chaque partie élémentaire correspondant une distance de reconstruction $z_w$, représentative de la distance entre l'échantillon et le premier capteur d'image 16 au niveau de la partie élémentaire. L'étape 120 est alors mise en œuvre séparément à partir de chaque partie élémentaire $I_{1,w}$, de façon à effectuer une reconstruction de l'onde lumineuse d'exposition 14 atteignant le capteur d'image 10 au niveau de ladite partie élémentaire, selon la distance de reconstruction $z_w$ associée à la partie élémentaire $I_{1,w}$. Autrement dit, à chaque partie élémentaire $I_{1,w}$,

on attribue une distance de reconstruction $z_w$ correspondant à une estimation, dans ladite partie élémentaire, de la distance entre le plan de l'échantillon $P_{10}$ et le plan de détection $P_0$.

Cependant, la position de l'échantillon par rapport au premier capteur d'image 16 n'est généralement pas connue a priori. Une phase de calibration, comportant les étapes représentées sur la figure 6B, est mise en œuvre, de façon à estimer une évolution de la distance entre l'échantillon 10 et le capteur d'image 16. Ces étapes sont les suivantes :

Etape 111 : sélection d'une pluralité de points de calibration $U_n$ sur la première image acquise $I_1$. Il s'agit de déterminer au moins deux points, et de préférence au moins trois points sur la première image $I_1$ acquis, au cours de l'étape 100, par le premier capteur d'image. Ces points sont de préférence aussi espacés que possible les uns des autres. Il peut par exemple s'agir de quatre points situés au niveau des coins de la première image $I_1$, auxquels on peut éventuellement ajouter un ou deux points au niveau du centre de l'image. Le nombre de points de calibration doit être suffisamment faible pour que la calibration soit réalisée rapidement. Il peut être compris entre 2 et 10. Sur la figure 6C, on a représenté 4 points de calibration situés au niveau des coins de la première image $I_1$.

Etape 112 : détermination d'une zone de calibration $V_n$ autour de chaque point de calibration. Typiquement, une zone de calibration s'étend sur au moins 10 pixels autour d'un point de calibration $U_n$. Une zone de calibration peut ainsi comprendre 10 x 10 pixels, voire 20 x 20 pixels, ou davantage, par exemple 50 x 50 pixels

Les étapes 113 à 115 visent à mettre en œuvre un algorithme de focalisation numérique, tel que précédemment décrit, sur chaque zone de calibration $V_n$, de manière à estimer une distance $z_n$ entre l'échantillon 10 et le plan de détection $P_0$ au niveau de chaque zone de calibration $V_n$.

Etape 113 : application d'un opérateur de propagation $h$ à chaque zone élémentaire de calibration $V_n$ afin d'obtenir, pour chacune d'entre elle, une image complexe $A_{n,z}$ dite de calibration, de l'onde lumineuse d'exposition $14_n$ atteignant le plan de détection $P_0$ au niveau de ladite zone élémentaire de calibration $V_n$, selon différents plans de reconstruction $P_z$ respectivement espacés de différentes distances $z$, du plan de détection. Les plans de reconstruction $P_z$ sont par exemple espacés de quelques microns, par exemple 10 $\mu$m, dans une plage de distances susceptible de contenir l'échantillon 10. On obtient ainsi une image complexe $A_{n,z}$ de l'onde lumineuse $14_n$ auquel est exposé le premier capteur d'image 16, dans la zone élémentaire de calibration $V_n$, selon les différents plans de reconstruction $P_z$.

Etape 114 : pour chaque zone élémentaire de calibration $V_n$, association, à chaque plan de reconstruction $P_z$, d'un indicateur de dispersion $q_{n,z}$ d'une image dite de reconstruction $A'_{n,z}$ obtenue à partir de la phase et/ou du module de l'expression complexe de l'onde lumineuse d'exposition 14, à partir de l'image complexe de calibration $A_{n,z}$ reconstruite lors de l'étape 113. L'indicateur de dispersion $q_{n,z}$ peut être un écart type du module ou de la phase de l'expression complexe reconstruite sur chaque plan de reconstruction.

Etape 115 : sur chaque zone élémentaire de calibration $V_n$, détermination d'une distance de calibration $z_n$, en fonction des différents indicateurs de netteté $q_{n,z}$. La distance de calibration $z_n$ est la distance entre l'échantillon 10 et le plan de détection $P_0$, au niveau de chaque zone élémentaire de calibration $V_n$. D'une façon générale, cette étape revient à appliquer un autofocus numérique de façon à déterminer le plan de reconstruction $P_z$ dans lequel une image de la phase ou du module de l'image complexe $A_{n,z}$ sont les plus nets, ce plan de reconstruction étant alors considéré comme situé au niveau de l'échantillon 10. L'indicateur de netteté $q_{n,z}$ peut être un de ceux décrits en lien avec la figure 5. La distance de calibration $z_n$ correspond généralement à une valeur particulière de l'indicateur de netteté, par exemple une valeur minimale ou une valeur maximale en fonction de l'indicateur de netteté retenu.

Etape 116 : partition de la première image acquise $I_1$ en différentes parties élémentaires $I_{1,w}$, et association, à chaque partie élémentaire, d'une distance $z_w$ séparant l'échantillon 10 du plan de détection $P_0$. Chacune de ces distances est déterminée en fonction des distances de calibration $z_n$ établies pour chaque zone élémentaire de calibration $V_n$, par exemple par une interpolation bidimensionnelle. L'interpolation peut être une interpolation linéaire. Le nombre $W$ de parties élémentaires $I_{1,w}$ peut être déterminé a priori, ou en fonction de la différence entre différentes distances de calibration. Plus l'échantillon est incliné, plus le nombre de parties élémentaires peut être élevé.

L'étape 120 comporte alors une reconstruction de l'amplitude complexe de l'onde lumineuse d'exposition 14 en considérant indépendamment chaque partie élémentaire $I_{1,w}$ de la première image $I_1$. Ainsi, chaque partie élémentaire de la première image est propagée selon la distance $z_w$ qui lui a été attribuée lors de l'étape 116. On effectue alors autant de reconstructions qu'il y a de parties élémentaires $I_{1,w}$, ces reconstructions étant effectuées simultanément ou successivement, mais indépendamment les unes des autres. On obtient alors des images complexes $A_{z,w}$ de l'onde lumineuse d'exposition 14 selon différents plans de reconstruction élémentaires $P_{z,w}$, chaque plan de reconstruction élémentaire s'étendant à la distance $z_w$ plan de détection - échantillon déterminée au niveau de la partie élémentaire $I_{1,w}$.

On peut alors former une image reconstruite $I_{z,w}$, dite image reconstruite élémentaire, à partir du module ou de la phase de l'image complexe $A_{z,w}$, selon les différents plans de reconstruction élémentaires $P_{z,w}$. La figure 6D représente une coupe montrant différents plans de reconstruction élémentaires $P_{z,w}$ adjacents les uns des autres. Les images reconstruites $I_{z,w}$ peuvent être concaténées pour former une image reconstruite $I_z$.

Ce mode de réalisation peut être utilisé pour une simple observation de l'échantillon, grâce à l'image reconstruite $I_z$. Par ailleurs, lorsqu'une zone d'intérêt est sélectionnée puis observée par un deuxième capteur d'image, à travers un objectif 25, les distances $z_w$ peuvent être utilisées pour positionner automatiquement la région d'intérêt sélectionnée dans le plan focal de l'objectif 25. On tire alors profit de la bonne connaissance de la position de l'échantillon par rapport au plan de détection.

La figure 7A représente une image reconstruite $I_z$ d'une lame de tissu humain. On a représenté différentes régions d'intérêt sur l'image de la figure 7A. Les figures 7B, 7C et 7D représentent ces régions d'intérêt en ne considérant qu'une seule distance de reconstruction. Les figures 7E, 7F et 7G montrent respectivement les régions d'intérêt représentées sur les figures 7B, 7C et 7D, en mettant en œuvre le mode de réalisation représenté sur la figure 6B. Chaque région d'intérêt a été obtenue en prenant en compte une inclinaison de l'échantillon par rapport au plan de détection. On constate que cela améliore la résolution spatiale, notamment en comparant les images 7B et 7E, ou 7C et 7F.

La figure 8 montre un exemple d'affichage que l'on peut obtenir sur l'écran 44. Sur la partie gauche de l'écran (1), on a représenté une image $I_z$ reconstruite à partir d'un échantillon formé par une lame de tissu biologique, en considérant le module d'une expression complexe reconstruite dans le plan de l'échantillon. Sur la partie droite de l'écran (2), on a représenté une région d'intérêt ROI sélectionnée à partir de l'image reconstruite, obtenue avec un objectif de microscope.

L'invention pourra être appliquée dans le domaine de la santé, ou dans d'autres domaines dans lesquels il est nécessaire de disposer d'une vue d'ensemble d'un échantillon, tout en permettant une analyse aisée de régions d'intérêt sélectionnées dans ce dernier. Ainsi, l'invention aura des applications dans le domaine du contrôle de l'environnement, de l'agroalimentaire, les biotechnologies ou dans le suivi de procédés industriels.

**Revendications**

1. Dispositif (1) pour l'observation d'un échantillon (10) comportant :

   - un support (10s), destiné à maintenir l'échantillon ;
   - une première source de lumière (11), configurée pour émettre une onde lumineuse incidente (12) se propageant jusqu'à l'échantillon ;
   - un premier capteur d'image (16), configuré pour acquérir, dans une première modalité, une première image ($I_1$) de l'échantillon illuminé par l'onde lumineuse incidente (12), le support (10s) étant configuré pour maintenir l'échantillon entre la première source de lumière (11) et le premier capteur d'image (16), de telle sorte qu'aucune optique de grossissement n'est disposée entre l'échantillon et le premier capteur d'image, le premier capteur d'image étant exposé à une onde lumineuse (14) dite d'exposition, la première image ($I_1$) définissant un premier champ d'observation ($\Omega_1$) de l'échantillon ;

le dispositif comportant également :

- un deuxième capteur d'image (26), distinct du premier capteur d'image et optiquement couplé à un système optique (25) disposant d'un grossissement supérieur à 1, de façon à acquérir, dans une deuxième modalité, une deuxième image ($I_2$) de l'échantillon, maintenu sur le support (10s), selon un deuxième champ d'observation ($\Omega_2$) réduit par rapport au premier champ d'observation ($\Omega_1$), le système optique étant alors disposé entre l'échantillon et le deuxième capteur d'image et étant configuré pour former, dans la deuxième modalité, une image de l'échantillon sur le deuxième capteur d'image ;
- un mécanisme de déplacement (30) relatif de l'échantillon (10) par rapport au premier capteur d'image (16) et au système optique (25), de façon à alterner entre :

- la première modalité, selon laquelle l'échantillon est disposé dans le champ d'observation ($\Omega_1$) du premier capteur d'image (16), de façon à acquérir la première image ($I_1$);
- la deuxième modalité, selon laquelle l'échantillon est disposé dans le champ d'observation ($\Omega_2$) du deuxième capteur d'image (26), de façon à acquérir la deuxième image ($I_2$).

**2.** Dispositif selon la revendication 1, comportant une deuxième source de lumière (21), configurée pour illuminer l'échantillon (10) lors de l'acquisition de la deuxième image de l'échantillon.

**3.** Dispositif selon la revendication 1 ou la revendication 2, comportant :

- un sélecteur (41), configuré pour permettre la sélection d'une région d'intérêt (ROI) dans la première image ($I_1$);
- un processeur (40), configuré pour déterminer une position relative de l'échantillon (10) par rapport au système optique (25), selon laquelle la zone d'intérêt sélectionnée (ROI) s'étend dans le deuxième champ d'observation ($\Omega_2$);

de telle sorte que le mécanisme de déplacement (30) est configuré pour positionner automatiquement l'échantillon (10) relativement au système optique (25) selon ladite position relative déterminée par le processeur.

**4.** Dispositif selon la revendication 3, comportant un processeur (40) configuré pour appliquer un opérateur de propagation numérique (h) à partir de la première image ($I_1$), de façon à :

- calculer une expression complexe de l'onde lumineuse d'exposition (14) selon une surface de reconstruction ($P_z$) s'étendant face au premier capteur d'image (16),
- former une image ($I_z$), dite reconstruite, à partir du module et/ou de la phase de ladite expression complexe ;
- de telle sorte que dans la deuxième modalité, la position de l'échantillon par rapport au système optique (25) est définie en fonction d'une zone d'intérêt (ROI) sélectionnée à partir de l'image reconstruite ($I_z$).

**5.** Dispositif selon l'une quelconque des revendications 3 ou 4, dans lequel le premier capteur d'image (16) s'étendant selon un plan de détection ($P_0$), le dispositif comporte un processeur (40) configuré pour appliquer une focalisation numérique à partir de la première image ($I_1$), de façon à estimer une distance ($z_{ROI}$) entre l'échantillon (10) et le plan de détection ($P_0$), au niveau de la région d'intérêt (ROI), de telle sorte que la position relative de l'échantillon (10) par rapport au système optique (25) est déterminée en fonction de la distance ainsi estimée.

**6.** Dispositif selon l'une quelconque des revendications 1 à 5, dans lequel le premier capteur d'image (16) et le deuxième capteur d'image (26) étant fixes, le mécanisme de déplacement (30) est configuré pour déplacer l'échantillon (10):

- face au premier capteur d'image (16) dans la première modalité ;
- et face au système optique (25) dans la deuxième modalité.

**7.** Dispositif selon l'une quelconque des revendications 1 à 5, dans lequel l'échantillon étant fixe, le mécanisme de déplacement est configuré pour :

- déplacer le premier capteur d'image (16) pour l'amener face à l'échantillon (10), dans la première modalité ;
- et déplacer le système optique (25) pour l'amener face à l'échantillon (10), dans la deuxième modalité.

**8.** Procédé d'observation d'un échantillon (10) comportant les étapes suivantes :

a) illumination de l'échantillon à l'aide d'une première source de lumière (11);

b) acquisition d'une image de l'échantillon, dite première image ($I_1$), à l'aide d'un premier capteur d'image (16), le premier capteur d'image étant exposé à une onde lumineuse dite d'exposition (14), l'échantillon étant maintenu entre la première source de lumière et le premier capteur d'image, aucune optique de grossissement n'étant disposée entre le premier capteur d'image et l'échantillon;

c) sélection d'une région d'intérêt (ROI) de l'échantillon à partir de la première image ($I_1$);

d) déplacement relatif de l'échantillon par rapport au premier capteur d'image et par rapport à un système optique (25), ayant un grossissement supérieur à 1, le système optique étant optiquement couplé à un deuxième capteur d'image (26) distinct du premier capteur d'image, le système optique étant disposé entre l'échantillon et le deuxième capteur d'image et étant configuré pour former une image de l'échantillon sur le deuxième capteur d'image, le déplacement étant effectué automatiquement par un mécanisme de déplacement (30), de telle sorte que la région d'intérêt (ROI) de l'échantillon, sélectionnée lors de l'étape c), soit située dans un champ d'observation ($\Omega_2$) du deuxième capteur d'image (26);

e) illumination de l'échantillon (10) à l'aide d'une deuxième source de lumière (21) et acquisition d'une image de la région d'intérêt de l'échantillon (ROI), dite deuxième image ($I_2$), à l'aide du deuxième capteur d'image (26).

9. Procédé selon la revendication 8, dans lequel lors de l'étape c), la région d'intérêt (ROI) est sélectionnée sur la première image ($I_1$), à l'aide d'un sélecteur manuel (41) ou par une analyse de la première image ($I_1$), l'analyse étant basée sur un critère de sélection préalablement défini, et mise en œuvre par un processeur (40).

10. Procédé selon la revendication 8, dans lequel le premier capteur d'image s'étendant selon un plan de détection ($P_0$), l'étape c) comporte les sous étapes suivantes:

ci) application d'un opérateur de propagation (h) à partir de la première image ($I_1$), de façon à calculer une expression complexe de l'onde lumineuse d'exposition (14) selon une surface de reconstruction ($P_z$), s'étendant face au plan de détection ($P_0$);

cii) formation d'une image, dite image reconstruite ($I_z$), en fonction du module et/ou de la phase de l'expression complexe calculée lors de la sous-étape ci);

ciii) sélection de la zone d'intérêt (ROI) à partir de l'image reconstruite ($I_z$).

11. Procédé selon la revendication 10, dans lequel lors de l'étape ci), l'opérateur de propagation est appliqué à une image dite intermédiaire ($I'_1$), obtenue à partir de la première image ($I_1$), et comportant un nombre de pixels inférieur au nombre de pixels de la première image ($I_1$), le champ d'observation de l'image intermédiaire étant similaire au champ d'observation de la première image, l'étape c) comportant également les sous-étapes suivantes :

civ) application d'un opérateur de propagation (h) à partir de la première image, dans la région d'intérêt (ROI) sélectionnée dans la sous-étape ciii), de façon à calculer une expression complexe de l'onde lumineuse d'exposition selon une surface de reconstruction, s'étendant face au plan de détection, définissant une image complexe d'intérêt ($A_{z,ROI}$);

cv) à partir de l'image complexe d'intérêt ($A_{z,ROI}$) calculée, formation d'une image, dite image reconstruite d'intérêt ($I_{z,ROI}$), en fonction du module et/ou de la phase de l'expression complexe ;

cvi) affichage de l'image reconstruite d'intérêt ($I_{z,ROI}$).

12. Procédé selon l'une quelconque des revendications 10 ou 11, dans lequel lors de la sous-étape ciii), la région d'intérêt (ROI) est sélectionnée sur l'image reconstruite ($I_z$), à l'aide d'un sélecteur manuel (41) ou par une analyse de l'image reconstruite ($I_z$), l'analyse étant basée sur un critère de sélection préalablement défini, et mise en œuvre par un processeur (40).

13. Procédé selon l'une quelconque des revendications 10 à 12, dans lequel lors la sous-étape ci), la surface de reconstruction est un plan, dit plan de l'échantillon ($P_{10}$), selon lequel s'étend l'échantillon (10).

14. Procédé selon l'une quelconque des revendications 10 à 13 comportant, préalablement à l'étape c), une étape de calibration d'une position de l'échantillon (10) par rapport au plan de détection ($P_0$), l'étape de calibration comprenant les sous-étapes suivantes :

i) sélection d'une pluralité de points de calibration ($U_n$) sur la première image acquise ($I_1$);

ii) détermination d'une zone élémentaire de calibration ($V_n$) autour de chaque point de calibration ($U_n$) sélectionné ;

iii) mise en œuvre, par un processeur (40), d'un algorithme de focalisation numérique, de façon à estimer une distance, dite distance de calibration ($z_n$), entre l'échantillon (10) et le plan de

détection ($P_0$), au niveau de chaque zone élémentaire de calibration ($V_n$);

iv) partition de la première image acquise ($I_1$) en différentes images élémentaires ($I_{1,w}$), et association, à chaque image élémentaire, d'une distance ($z_w$) entre l'échantillon et le plan de détection ($P_0$), en fonction de la distance de calibration ($z_n$) estimée pour chaque zone élémentaire de calibration ($V_n$);

de telle sorte que

- la sous-étape ci) comporte une application d'un opérateur de propagation à chaque image élémentaire ($I_{1,w}$), selon la distance ($z_w$) associée à ladite image élémentaire, de façon à calculer, pour chaque image élémentaire, une expression complexe de l'onde lumineuse d'exposition (14) selon un plan de reconstruction élémentaire ($P_{z,w}$) ;
- l'étape cii) comporte une formation d'une image reconstruite élémentaire ($I_{z,w}$) à partir du module ou de la phase de l'expression complexe calculée lors de la sous-étape ci), selon chaque plan de reconstruction élémentaire ($P_{z,w}$), l'image reconstruite ($I_z$) étant obtenue par concaténation de chaque image reconstruite élémentaire ($I_{z,w}$).

15. Procédé selon la revendication 14, dans lequel l'algorithme de focalisation numérique comporte :

- une application d'un opérateur de propagation numérique (h) à chaque zone élémentaire de calibration ($V_n$) afin d'obtenir, pour chacune d'entre elles, une image complexe, dite de calibration, ($A_{n,z}$) de l'onde lumineuse d'exposition (14) selon différents plans de reconstruction ($P_z$) respectivement espacés de différentes distances ($z$), du plan de détection ($P_0$);
- pour chaque zone élémentaire de calibration ($V_n$), une détermination, pour chaque plan de reconstruction ($P_z$), d'un indicateur de netteté ($q_{n,z}$) d'une image de reconstruction obtenue ($A'_{n,z}$) à partir de la phase et/ou du module de l'expression complexe de calibration calculée dans ledit plan de reconstruction ($P_z$);
- une détermination d'une distance de calibration ($z_n$) entre l'échantillon et le plan de détection au niveau de chaque zone élémentaire de calibration ($V_n$), en fonction des indicateurs de netteté ($q_{n,z}$) calculés.

16. Procédé selon l'une quelconque des revendications 8 à 15 dans lequel l'étape d) comporte les sous-étapes suivantes :

di) mise en œuvre, par un processeur, d'un algorithme de focalisation numérique, de façon à estimer une distance ($z_{ROI}$) entre l'échantillon (10) et un plan de détection ($P_0$) selon lequel s'étend le capteur d'image (16), au niveau de la région d'intérêt ($ROI$) sélectionnée lors de l'étape c);

dii) déplacement relatif de l'échantillon (10) par rapport au système optique (25), en prenant en compte la distance ainsi estimée, de telle sorte que l'échantillon soit disposé dans un plan focal du système optique (25).

17. Procédé selon la revendication 16, dans lequel l'algorithme de focalisation numérique comporte :

- l'application d'un opérateur de propagation numérique ($h$) à partir de la première image, de façon à calculer une expression complexe de l'onde lumineuse d'exposition selon une pluralité de plans de reconstruction ($P_z$) respectivement situés à différentes distances ($z$) de reconstruction du plan de détection ($P_0$);
- l'obtention d'une image de reconstruction ($A'_z$) à chaque distance de reconstruction, à partir de la phase ou de l'amplitude de l'expression complexe déterminée selon chaque plan de reconstruction ($P_z$);
- détermination d'un indicateur de netteté ($q_z$) à chaque image de reconstruction ;
- détermination de la distance ($z_{ROI}$) entre l'échantillon et le plan de détection ($P_0$), au niveau de la région d'intérêt ($ROI$), en fonction de l'indicateur de netteté ($q_z$) déterminé sur chaque image de reconstruction.

**Patentansprüche**

1. Vorrichtung (1) zur Beobachtung einer Probe (10), beinhaltend:

- einen Träger (10s), der dazu bestimmt ist, die Probe zu halten;
- eine erste Lichtquelle (11), die dazu ausgestaltet ist, eine einfallende Lichtwelle (12) auszusenden, die sich bis zur Probe ausbreitet;
- einen ersten Bildsensor (16), der dazu ausgestaltet ist, in einer ersten Modalität ein erstes Bild ($I_1$) der von der einfallenden Lichtwelle (12) beleuchteten Probe aufzunehmen, wobei der Träger (10s) dazu ausgestaltet ist, die Probe zwischen der ersten Lichtquelle (11) und dem ersten Bildsensor (16) zu halten, derart, dass keine Vergrößerungsoptik zwischen der Probe und dem ersten Bildsensor angeordnet ist, wobei der erste Bildsensor mit einer Lichtwelle (14), Belichtungslichtwelle genannt, belichtet wird, wobei das erste Bild ($I_1$) ein erstes Beobach-

tungsfeld ($\Omega_1$) der Probe definiert;

wobei die Vorrichtung ferner beinhaltet:

- einen zweiten Bildsensor (26), der vom ersten Bildsensor verschieden ist und optisch mit einem optischen System (25) gekoppelt ist, das über eine Vergrößerung von mehr als 1 verfügt, so dass in einer zweiten Modalität ein zweites Bild ($I_2$) der auf dem Träger (10s) gehaltenen Probe gemäß einem zweiten Beobachtungsfeld ($\Omega_2$) aufgenommen wird, das in Bezug auf das erste Beobachtungsfeld ($\Omega_1$) reduziert ist, wobei das optische System dann zwischen der Probe und dem zweiten Bildsensor angeordnet ist und dazu ausgestaltet ist, in der zweiten Modalität ein Bild der Probe auf dem zweiten Bildsensor zu bilden;
- einen Bewegungsmechanismus (30) zum relativen Bewegen der Probe (10) in Bezug auf den ersten Bildsensor (16) und das optische System (25), so dass abgewechselt wird zwischen:

 • der ersten Modalität, gemäß der die Probe im Beobachtungsfeld ($\Omega_1$) des ersten Bildsensors (16) angeordnet ist, so dass das erste Bild ($I_1$) aufgenommen wird;
 • der zweiten Modalität, gemäß der die Probe im Beobachtungsfeld ($\Omega_2$) des zweiten Bildsensors (26) angeordnet ist, so dass das zweite Bild ($I_2$) aufgenommen wird.

2. Vorrichtung nach Anspruch 1, beinhaltend eine zweite Lichtquelle (21), die dazu ausgestaltet ist, die Probe (10) beim Aufnehmen des zweiten Bildes der Probe zu beleuchten.

3. Vorrichtung nach Anspruch 1 oder Anspruch 2, beinhaltend:

- einen Selektor (41), der dazu ausgestaltet ist, das Auswählen einer Region von Interesse (*ROI*) im ersten Bild ($I_1$) zu ermöglichen;
- einen Prozessor (40), der dazu ausgestaltet ist, eine relative Position der Probe (10) in Bezug auf das optische System (25) zu bestimmen, gemäß der sich die gewählte Region vom Interesse (*ROI*) im zweiten Beobachtungsfeld ($\Omega_2$) erstreckt;

derart, dass der Bewegungsmechanismus (30) dazu ausgestaltet ist, die Probe (10) automatisch relativ zum optischen System (25) gemäß der vom Prozessor bestimmten relativen Position zu positionieren.

4. Vorrichtung nach Anspruch 3, beinhaltend einen Prozessor (40), der dazu ausgestaltet ist, einen numerischen Ausbreitungsoperator (*h*) ausgehend vom ersten Bild ($I_1$) anzuwenden, so dass:

- ein komplexer Ausdruck der Belichtungslichtwelle (14) gemäß einer Rekonstruktionsfläche ($P_z$) berechnet wird, die sich gegenüber dem ersten Bildsensor (16) erstreckt,
- ein Bild ($I_z$), rekonstruiertes Bild genannt, ausgehend vom Modul und/oder von der Phase des komplexen Ausdrucks gebildet wird;
- derart, dass in der zweiten Modalität die Position der Probe in Bezug auf das optische System (25) in Abhängigkeit von einer Region von Interesse (*ROI*) definiert wird, die ausgehend von dem rekonstruierten Bild ($I_z$) gewählt wird.

5. Vorrichtung nach einem der Ansprüche 3 oder 4, bei der, wenn sich der erste Bildsensor (16) gemäß einer Detektionsebene ($P_0$) erstreckt, die Vorrichtung einen Prozessor (40) beinhaltet, der dazu ausgestaltet ist, eine numerische Fokussierung ausgehend von dem ersten Bild ($I_1$) anzuwenden, so dass eine Distanz ($z_{ROI}$) zwischen der Probe (10) und der Detektionsebene ($P_0$) im Bereich der Region von Interesse (*ROI*) geschätzt wird, derart, dass die relative Position der Probe (10) in Bezug auf das optische System (25) in Abhängigkeit von der so geschätzten Distanz bestimmt wird.

6. Vorrichtung nach einem der Ansprüche 1 bis 5, bei der, wenn der erste Bildsensor (16) und der zweite Bildsensor (26) ortsfest sind, der Bewegungsmechanismus (30) dazu ausgestaltet ist, die Probe (10) zu bewegen:

- gegenüber dem ersten Bildsensor (16) in der ersten Modalität;
- und gegenüber dem optischen System (25) in der zweiten Modalität.

7. Vorrichtung nach einem der Ansprüche 1 bis 5, bei der, wenn die Probe ortsfest ist, der Bewegungsmechanismus dazu ausgestaltet ist:

- den ersten Bildsensor (16) zu bewegen, um ihn nach gegenüber der Probe (10) zu führen, in der ersten Modalität;
- und das optische System (25) zu bewegen, um es nach gegenüber der Probe (10) zu führen, in der zweiten Modalität.

8. Verfahren zur Beobachtung einer Probe (10), beinhaltend die folgenden Schritte:

a) Beleuchten der Probe mithilfe einer ersten Lichtquelle (11);
b) Aufnehmen eines Bildes der Probe, erstes Bild ($I_1$) genannt, mithilfe eines ersten Bildsensors (16), wobei der erste Bildsensor mit einer Lichtwelle, Belichtungslichtwelle (14) genannt, belichtet wird, wobei die Probe zwischen der ersten Lichtquelle und dem ersten Bildsensor gehalten wird, wobei keine Vergrößerungsoptik zwischen dem ersten Bildsensor und der Probe angeordnet ist;

c) Auswählen einer Region von Interesse (ROI) der Probe ausgehend von dem ersten Bild ($I_1$);

d) relatives Bewegen der Probe in Bezug auf den ersten Bildsensor und in Bezug auf ein optisches System (25), das eine Vergrößerung von mehr als 1 hat, wobei das optische System optisch mit einem zweiten Bildsensor (26) gekoppelt ist, der vom ersten Bildsensor verschieden ist, wobei das optische System zwischen der Probe und dem zweiten Bildsensor angeordnet ist und dazu ausgestaltet ist, ein Bild der Probe auf dem zweiten Bildsensor zu bilden, wobei das Bewegen automatisch durch einen Bewegungsmechanismus (30) durchgeführt wird, derart, dass die Region von Interesse (ROI) der Probe, die im Schritt c) gewählt wurde, in einem Beobachtungsfeld ($\Omega_2$) des zweiten Bildsensors (26) gelegen ist;

e) Beleuchten der Probe (10) mithilfe einer zweiten Lichtquelle (21) und Aufnehmen eines Bildes der Region von Interesse der Probe (POI), zweites Bild ($I_2$) genannt, mithilfe des zweiten Bildsensors (26).

9. Verfahren nach Anspruch 8, bei dem im Schritt c) die Region von Interesse (ROI) auf dem ersten Bild ($I_1$) mithilfe eines manuellen Selektors (41) oder durch eine Analyse des ersten Bildes ($I_1$) gewählt wird, wobei die Analyse auf einem zuvor definierten Auswahlkriterium beruht und von einem Prozessor (40) implementiert wird.

10. Verfahren nach Anspruch 8, bei dem, wenn sich der erste Bildsensor gemäß einer Detektionsebene ($P_0$) erstreckt, der Schritt c) die folgenden Teilschritte umfasst:

    ci) Anwenden eines Ausbreitungsoperators (h) ausgehend vom ersten Bild ($I_1$), so dass ein komplexer Ausdruck der Belichtungslichtwelle (14) gemäß einer Rekonstruktionsfläche ($P_z$) berechnet wird, die sich gegenüber der Detektionsebene ($P_0$) erstreckt;

    cii) Bilden eines Bildes, rekonstruiertes Bild ($I_z$) genannt, in Abhängigkeit vom Modul und/oder von der Phase des im Teilschritt ci) berechneten komplexen Ausdrucks;

    ciii) Auswählen der Region von Interesse (ROI) ausgehend vom rekonstruierten Bild ($I_z$).

11. Verfahren nach Anspruch 10, bei dem im Schritt ci) der Ausbreitungsoperator auf ein Bild, Zwischenbild ($I'_1$) genannt, angewandt wird, das ausgehend von dem ersten Bild ($I_1$) erhalten wird und eine Pixelanzahl beinhaltet, die geringer als die Pixelanzahl des ersten Bildes ($I_1$) ist, wobei das Beobachtungsfeld des Zwischenbildes ähnlich dem Beobachtungsfeld des ersten Bildes ist, wobei der Schritt c) auch die folgenden Teilschritte beinhaltet:

    civ) Anwenden eines Ausbreitungsoperators (h), ausgehend vom ersten Bild, in der im Teilschritt ciii) gewählten Region von Interesse (ROI), so dass ein komplexer Ausdruck der Belichtungslichtwelle gemäß einer Rekonstruktionsfläche berechnet wird, die sich gegenüber der Detektionsebene erstreckt, wobei ein komplexes Bild von Interesse ($A_{z,ROI}$) definiert wird;

    cv) ausgehend von dem berechneten komplexen Bild von Interesse ($A_{z,ROI}$), Bilden eines Bildes, rekonstruiertes Bild von Interesse ($I_{z,ROI}$) genannt, in Abhängigkeit vom Modul und/oder von der Phase des komplexen Ausdrucks;

    cvi) Anzeigen des rekonstruierten Bildes von Interesse ($I_{z,ROI}$).

12. Verfahren nach einem der Ansprüche 10 oder 11, bei dem im Teilschritt ciii) die Region von Interesse (ROI) auf dem rekonstruierten Bild ($I_z$) mithilfe eines manuellen Selektors (41) oder durch eine Analyse des rekonstruierten Bildes ($I_z$) gewählt wird, wobei die Analyse auf einem zuvor definierten Auswahlkriterium beruht und von einem Prozessor (40) implementiert wird.

13. Verfahren nach einem der Ansprüche 10 bis 12, bei dem im Teilschritt ci) die Rekonstruktionsfläche eine Ebene ist, Probenebene ($P_{10}$) genannt, gemäß der sich die Probe (10) erstreckt.

14. Verfahren nach einem der Ansprüche 10 bis 13, beinhaltend vor dem Schritt c) einen Schritt des Kalibrierens einer Position der Probe (10) in Bezug auf die Detektionsebene ($P_0$), wobei der Kalibrierungsschritt die folgenden Teilschritte umfasst:

    i. Auswählen einer Mehrzahl von Kalibrierungspunkten ($U_n$) auf dem ersten aufgenommenen Bild ($I_1$);

    ii. Bestimmen einer elementaren Kalibrierungszone ($V_n$) um jeden gewählten Kalibrierungspunkt ($U_n$) herum;

    iii. Implementieren, durch einen Prozessor (40), eines Algorithmus zur numerischen Fokussierung, so dass eine Distanz, Kalibrierungsdistanz ($z_n$) genannt, zwischen der Probe (10) und der Detektionsebene ($P_0$) im Bereich jeder elementaren Kalibrierungszone ($V_n$) geschätzt wird;

    iv. Aufteilen des aufgenommenen ersten Bildes

($I_1$) in verschiedene elementare Bilder ($I_{1,w}$) und Zuordnen, zu jedem elementaren Bild, einer Distanz ($z_w$) zwischen der Probe und der Detektionsebene ($P_0$) in Abhängigkeit von der für jede elementare Kalibrierungszone ($V_n$) geschätzten Kalibrierungsdistanz ($z_n$);

derart, dass

- der Teilschritt ci) eine Anwendung eines Ausbreitungsoperators auf jedes elementare Bild ($I_{1,w}$) gemäß der dem elementaren Bild zugeordneten Distanz ($z_w$) beinhaltet, so dass für jedes elementare Bild ein komplexer Ausdruck der Belichtungslichtwelle (14) gemäß einer elementaren Rekonstruktionsebene ($P_{z,w}$) berechnet wird;
- der Schritt cii) ein Bilden eines rekonstruierten elementaren Bildes ($I_{z,w}$) ausgehend vom Modul oder von der Phase des im Teilschritt ci) berechneten komplexen Ausdrucks gemäß jeder elementaren Rekonstruktionsebene ($P_{z,w}$) beinhaltet, wobei das rekonstruierte Bild ($I_z$) durch Verkettung jedes rekonstruierten elementaren Bildes ($I_{z,w}$) erhalten wird.

15. Verfahren nach Anspruch 14, bei dem der Algorithmus zur numerischen Fokussierung beinhaltet:

- ein Anwenden eines numerischen Ausbreitungsoperators (h) auf jede elementare Kalibrierungszone ($V_n$), um für jede von ihnen ein komplexes Bild, Kalibrierungsbild ($A_{n,z}$) genannt, der Belichtungslichtwelle (14) gemäß verschiedenen Rekonstruktionsebenen ($P_z$) zu erhalten, die jeweils um verschiedene Distanzen ($z$) von der Detektionsebene ($P_0$) beabstandet sind;
- für jede elementare Kalibrierungszone ($V_n$) ein Bestimmen, für jede Rekonstruktionsebene ($P_z$) eines Schärfeindikators ($q_{n,z}$) eines Rekonstruktionsbildes ($A'_{n,z}$), das ausgehend von der Phase und/oder vom Modul des in der Rekonstruktionsebene ($P_z$) berechneten komplexen Kalibrierungsausdrucks erhalten wird;
- ein Bestimmen einer Kalibrierungsdistanz ($z_n$) zwischen der Probe und der Detektionsebene im Bereich jeder elementaren Kalibrierungszone ($V_n$) in Abhängigkeit von den berechneten Schärfeindikatoren ($q_{n,z}$).

16. Verfahren nach einem der Ansprüche 8 bis 15, bei dem der Schritt d) die folgenden Teilschritt umfasst:

di) Implementierung, durch einen Prozessor, eines Algorithmus zur numerischen Fokussierung, so dass eine Distanz ($z_{ROI}$) zwischen der Probe (10) und einer Detektionsebene ($P_0$) geschätzt wird, gemäß der sich der Bildsensor (16) erstreckt, im Bereich der im Schritt c) gewählten Region von Interesse (ROI);
dii) relatives Bewegen der Probe (10) in Bezug auf das optische System (25) unter Berücksichtigung der so geschätzten Distanz derart, dass die Probe in einer Brennebene des optischen Systems (25) angeordnet ist.

17. Verfahren nach Anspruch 16, bei dem der Algorithmus zur numerischen Fokussierung beinhaltet:

- das Anwenden eines numerischen Ausbreitungsoperators (h) ausgehend vom ersten Bild, so dass ein komplexer Ausdruck der Belichtungslichtwelle gemäß einer Mehrzahl von Rekonstruktionsebenen ($P_z$) berechnet wird, die jeweils in unterschiedlichen Rekonstruktionsdistanzen ($z$) von der Detektionsebene ($P_0$) gelegen sind;
- das Erhalten eines Rekonstruktionsbildes ($A'_z$) für jede Rekonstruktionsdistanz ausgehend von der Phase oder der Amplitude des gemäß jeder Rekonstruktionsebene ($P_z$) bestimmten komplexen Ausdrucks;
- Bestimmen eines Schärfeindikators ($q_z$) für jedes Rekonstruktionsbild;
- Bestimmen der Distanz ($z_{ROI}$) zwischen der Probe und der Detektionsebene ($P_0$) im Bereich der Region von Interesse (ROI) in Abhängigkeit von dem auf jedem Rekonstruktionsbild bestimmten Schärfeindikator ($q_z$).

## Claims

1. A device (1) for observing a sample (10) comprising:

- a holder (10s), intended to hold the sample;
- a first light source (11), configured to emit an incident light wave (12) that propagates to the sample;
- a first image sensor (16), configured to acquire, in a first mode, a first image ($I_1$) of the sample illuminated by the incident light wave (12), the holder (10s) being configured to hold the sample between the first light source (11) and the first image sensor (16) in such a way that no magnifying optics are placed between the sample and the first image sensor, the first image sensor being exposed to a light wave (14) called the exposure light wave, the first image ($I_1$) defining a first field of observation ($\Omega_1$) of the sample;

the device also comprising:

- a second image sensor (26), which is different from the first image sensor, optically coupled to an optical system (25) having a magnification higher than 1, so as to acquire, in a second mode, a second image ($I_2$) of the sample, held on the holder (10s), in a second field of observation ($\Omega_2$) that is smaller than the first field of observation ($\Omega_1$), the optical system being arranged between the sample and the second image sensor, and being configured to form, in the second mode, an image of the sample on the second image sensor;

- a mechanism (30) for moving the sample (10) relative to the first image sensor (16) and to the optical system (25), so as to alternate between:

    ■ the first mode, in which the sample is placed in the field of observation ($\Omega_1$) of the first image sensor (16), so as to acquire the first image ($I_1$);
    ■ the second mode, in which the sample is placed in the field of observation ($\Omega_2$) of the second image sensor (26), so as to acquire the second image ($I_2$).

**2.** The device as claimed in claim 1, comprising a second light source (21) configured to illuminate the sample (10) during the acquisition of the second image of the sample.

**3.** The device as claimed in claim 1 or claim 2, comprising:

    - a selector (41), configured to allow a region of interest (ROI) in the first image ($I_1$) to be selected; and
    - a processor (40), configured to determine a relative position of the sample (10) with respect to the optical system (25), in which position the selected region of interest (ROI) lies in the second field of observation ($\Omega_2$);

such that the moving mechanism (30) is configured to automatically position the sample (10) relative to the optical system (25) in said relative position determined by the processor.

**4.** The device as claimed in claim 3, comprising a processor (40) configured to apply a numerical propagation operator (h) to the first image ($I_1$), so as:

    - to calculate a complex expression for the exposure light wave (14) on a reconstruction surface ($P_z$) lying facing the first image sensor (16), and
    - to form an image ($I_z$), called the reconstructed image, from the modulus and/or phase of said complex expression;
    - such that, in the second mode, the position of the sample with respect to the optical system (25) is defined depending on a region of interest (ROI) selected in the reconstructed image ($I_z$).

**5.** The device as claimed in either one of claims 3 and 4, wherein the first image sensor (16) lies in a detection plane ($P_0$), and the device comprises a processor (40) configured to apply a digital focus to the first image ($I_1$) so as to estimate a distance ($z_{ROI}$) between the sample (10) and the detection plane ($P_0$) in the region of interest (ROI), such that the relative position of the sample (10) with respect to the optical system (25) is determined depending on the distance thus estimated.

**6.** The device as claimed in any one of claims 1 to 5, wherein the first image sensor (16) and the second image sensor (26) being fixed, the moving mechanism (30) is configured to move the sample (10):

    - to facing the first image sensor (16) in the first mode;
    - and to facing the optical system (25) in the second mode.

**7.** The device as claimed in any one of claims 1 to 5, wherein the sample being fixed, the moving mechanism is configured to:

    - move the first image sensor (16) in order to bring it to facing the sample (10), in the first mode;
    - and to move the optical system (25) in order to bring it to facing the sample (10), in the second mode.

**8.** A method for observing a sample (10), comprising the following steps:

    a) illuminating the sample using a first light source (11);
    b) acquiring an image of the sample, called the first image ($I_1$), using a first image sensor (16), the first image sensor being exposed to a light wave, called the exposure light wave (14), the sample being held between the first light source and the first image sensor, no magnifying optics being placed between the first image sensor and the sample;
    c) selecting a region of interest (ROI) of the sample in the first image ($I_1$);
    d) moving the sample relative to the first image sensor and to an optical system (25) having a magnification higher than 1, the optical system being optically coupled to a second image sensor (26), the second image sensor being different from the first image sensor, the optical system being arranged between the sample and the second image sensor, and being configured to form an image of the sample on the second image sensor, the movement being carried out automatically by a moving mechanism (30), such that the region of interest ($ROI$) of the sample, i.e. the region selected in step c), is located in a field of observation ($\Omega_2$) of the second image sensor (26);

e) illuminating the sample (10) using a second light source (21) and acquiring an image of the region of interest ($ROI$) of the sample, called the second image ($I_2$), using the second image sensor (26).

9. The method as claimed claim 8, wherein, in step c), the region of interest ($ROI$) is selected, in the first image ($I_1$), using a manual selector (41) or via an analysis of the first image ($I_1$), the analysis being based on a predefined selection criterion and implemented by a processor (40).

10. The method as claimed in claim 8, wherein the first image sensor lying in a detection plane ($P_0$), step c) comprises the following substeps:

ci) applying a propagation operator ($h$) to the first image ($I_1$), so as to calculate a complex expression for the exposure light wave (14) on a reconstruction surface ($P_z$) lying facing the detection plane ($P_0$);

cii) forming an image, called the reconstructed image ($I_z$), depending on the modulus and/or phase of the complex expression calculated in substep ci);

ciii) selecting the region of interest ($ROI$) in the reconstructed image ($I_z$).

11. The method as claimed in claim 10, wherein, in step ci), the propagation operator is applied to an image, called the intermediate image ($I'_1$), obtained from the first image ($I_1$) and comprising a number of pixels lower than the number of pixels of the first image ($I_1$), the field of observation of the intermediate image being similar to the field of observation of the first image, step c) also comprising the following substeps:

civ) applying a propagation operator ($h$) to the first image, in the region of interest ($ROI$) selected in substep ciii), so as to calculate a complex expression for the exposure light wave on a reconstruction surface lying facing the detection plane, defining a complex image of interest ($A_{z,ROI}$);

cv) from the calculated complex image of interest ($A_{z,ROI}$), forming an image, called the reconstructed image of interest ($I_{z,ROI}$), depending on the modulus and/or phase of the complex expression;

cvi) displaying the reconstructed image of interest ($I_{z,ROI}$).

12. The method as claimed in either one of claims 10 and 11, wherein, in substep ciii), the region of interest ($ROI$) is selected, in the reconstructed image ($I_z$), using a manual selector (41) or via an analysis of the reconstructed image ($I_z$), the analysis being based on a predefined selection criterion and implemented by a processor (40).

13. The method as claimed in any one of claims 10 to 12, wherein, in substep ci), the reconstruction surface is a plane, called the sample plane ($P_{10}$), in which the sample (10) lies.

14. The method as claimed in any one of claims 10 to 13 comprising, prior to step c), a step of calibrating a position of the sample (10) with respect to the detection plane ($P_0$), the calibrating step comprising the following substeps:

i) selecting a plurality of calibration points ($U_n$) in the acquired first image ($I_1$);
ii) defining an elementary calibration region ($V_n$) about each selected calibration point ($U_n$);
iii) implementing, with a processor (40), a digital focusing algorithm, so as to estimate a distance, called the calibration distance ($z_n$), between the sample (10) and the detection plane ($P_0$), for each elementary calibration region ($V_n$);
iv) partitioning the acquired first image ($I_1$) into various elementary images ($I_{1,w}$), and associating, with each elementary image, a distance ($z_w$) between the sample and the detection plane ($P_0$), depending on the calibration distance ($z_n$) estimated for each elementary calibration region ($V_n$);

such that:

- substep ci) comprises applying a propagation operator to each elementary image ($I_{1,w}$), depending on the distance ($z_w$) associated with said elementary image, so as to calculate, for each elementary image, a complex expression for the exposure light wave (14) in an elementary reconstruction plane ($P_{z,w}$);
- step cii) comprises forming an elementary reconstructed image ($I_{z,w}$) from the modulus or phase of the complex expression calculated in substep ci), in each elementary reconstruction plane ($P_{z,w}$), the reconstructed image ($I_z$) being obtained by concatenation of each elementary reconstructed image ($I_{z,w}$).

15. The method as claimed in claim 14, wherein the digital focusing algorithm comprises:

- applying a numerical propagation operator ($h$) to each elementary calibration region ($V_n$) in order to obtain, for each thereof, a complex image, called the calibration image ($A_{n,z}$), of the exposure light wave (14) in various reconstruction planes ($P_z$) that are respectively spaced apart by various distances ($z$) from the detection plane ($P_0$);

- for each elementary calibration region ($V_n$), determining, for each reconstruction plane ($P_z$), an indicator ($q_{n,z}$) of the clearness of an obtained reconstructed image ($A'_{n,z}$) from the phase and/or modulus of the complex calibration expression calculated in said reconstruction plane ($P_z$);

- determining a calibration distance ($z_n$) between the sample and the detection plane for each elementary calibration region ($V_n$), depending on the calculated clearness indicators ($q_{n,z}$).

16. The method as claimed in any one of claims 8 to 15, wherein steps d) comprises the following substeps:

di) implementing, with a processor, a digital focusing algorithm, so as to estimate a distance ($z_{ROI}$) between the sample (10) and a detection plane ($P_0$) in which the image sensor (16) lies, in the region of interest ($ROI$) selected in step c);
dii) moving the sample (10) relative to the optical system (25), while taking into account the distance thus estimated, such that the sample is placed in a focal plane of the optical system (25).

17. The method as claimed in claim 16, wherein the digital focusing algorithm comprises:

- applying a numerical propagation operator ($h$) to the first image, so as to calculate a complex expression for the exposure light wave in a plurality of reconstruction planes ($P_z$) respectively located at various reconstruction distances ($z$) from the detection plane ($P_0$);
- obtaining a reconstruction image ($A'_z$) at each reconstruction distance, from the phase or amplitude of the complex expression determined in each reconstruction plane ($P_z$);
- determining an indicator ($q_z$) of the clearness of each reconstruction image;
- determining the distance ($z_{ROI}$) between the sample and the detection plane ($P_0$), in the region of interest ($ROI$), depending on the clearness indicator ($q_z$) determined for each reconstruction image.

**Fig. 1A**

**Fig. 1B**

EP 3 519 899 B1

Fig. 1C

Fig. 1D

Fig. 1E

25

**Fig. 2A**

**Fig. 2B**

**Fig. 2C**

**Fig. 2D**

**Fig. 2E**

**Fig. 2F**

**Fig. 2G**

1000 μm

$I_1$

$ROI$

**Fig. 2H**

100 μm

$I_2$

$ROI$

**Fig. 3A**

$I_z$

$ROI$

**Fig. 3B**

$I_{z,ROI}$

**Fig. 3C**

$I_{z,ROI}$

110

$I_1$

119

$I'_1$

120

$I_z$

130

$ROI$

132 ← $I_1$

$I_{1,ROI}$

134

$I_{z,ROI}$

140

**Fig. 3D**

**Fig. 4A**

**Fig. 4B**

**Fig. 4C**

**Fig. 5**

$P_{10}$

10

↓ 14

$P_0$

20

**Fig. 6A**

110

$I_1$

111 ← $U_n$

112

$V_n$

113

$A_{n,z}, A'_{n,z}$

114

$q_{n,z}$

115

$z_n$

116

$I_{1,w}\ z_w$

120

$A_{z,w}\ ,\ I_{z,w}\ ,\ I_z$

**Fig. 6B**

**Fig. 6C**

**Fig. 6D**

**Fig. 7A**

**Fig. 7B**

**Fig. 7C**

**Fig. 7D**

**Fig. 7E**

**Fig. 7F**

**Fig. 7G**

**Fig. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008090330 A
- WO 2014118263 A
- WO 2016107995 A
- US 20120218379 A
- US 20120148141 A
- FR 1554811
- FR 1652500

**Littérature non-brevet citée dans la description**

- **RYLE et al.** Digital in-line holography of biological specimens. *Proc. Of SPIE,* 2006, vol. 6311
- **S. N. A. MOREL ; A. DELON ; P. BLANDIN ; T. BORDY ; O. CIONI ; L. HERVÉ ; C. FROMENTIN ; J. DINTEN ; C. ALLIER.** Wide-Field Lensfree Imaging of Tissue Slides. *Advanced Microscopy Techniques IV*
- Neurophotonics II. SPIE Proceedings. Optical Society of America, vol. 9536